(19) **Europäisches Patentamt / European Patent Office / Office européen des brevets**

(11) **EP 4 260 653 B1**

(12) **FASCICULE DE BREVET EUROPEEN**

(45) Date de publication et mention
de la délivrance du brevet:
**18.03.2026 Bulletin 2026/12**

(21) Numéro de dépôt: **21810391.9**

(22) Date de dépôt: **26.11.2021**

(51) Classification Internationale des Brevets (IPC):
**H04W 84/18** (2009.01)     **H04W 4/44** (2018.01)
**H04W 88/04** (2009.01)

(52) Classification Coopérative des Brevets (CPC):
**H04W 84/18;** H04W 4/44; H04W 88/04

(86) Numéro de dépôt international:
**PCT/EP2021/083094**

(87) Numéro de publication internationale:
**WO 2022/128400 (23.06.2022 Gazette 2022/25)**

(54) **DEPLOIEMENT AUTOMATIQUE D'UN RESEAU DE COMMUNICATION SANS-FIL LINÉAIRE MAILLÉ**

AUTOMATISCHE BEREITSTELLUNG EINES DRAHTLOSEN MESH LINEAR KOMMUNIKATIONSNETZWERKS

AUTOMATIC DEPLOYMENT OF A MESH LINEAR WIRELESS COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2020 FR 2013143**

(43) Date de publication de la demande:
**18.10.2023 Bulletin 2023/42**

(73) Titulaire: **Commissariat à l'Energie Atomique et aux Energies Alternatives
75015 Paris (FR)**

(72) Inventeurs:
• **JANNETEAU, Christophe**
**91191 GIF SUR YVETTE (FR)**
• **BOC, Michael**
**91191 GIF SUR YVETTE (FR)**

(74) Mandataire: **Atout PI Laplace
Immeuble Up On
25 Boulevard Romain Rolland
CS 40072
75685 Paris Cedex 14 (FR)**

(56) Documents cités:
**EP-A1- 2 592 871          EP-A1- 3 648 538
WO-A1-2017/068263       WO-A1-2020/183100
DE-A1- 102017 222 905   ES-A1- 2 553 783
US-A1- 2015 237 563**

• **RAHMAN MD MAHBUBUR ET AL: "Relay vehicle formations for optimizing communication quality in robot networks", 2017 IEEE/RSJ INTERNATIONAL CONFERENCE ON INTELLIGENT ROBOTS AND SYSTEMS (IROS), IEEE, 24 September 2017 (2017-09-24), pages 6633 - 6639, XP033266728, [retrieved on 20171213], DOI: 10.1109/IROS.2017.8206577**

**Description**

Domaine de l'invention

L'invention est dans le domaine technique des réseaux de télécommunication, et concerne plus particulièrement un procédé de déploiement automatique d'un réseau de communication sans fil maillé en vue de maintenir une connectivité sans-fil entre un véhicule de mission en déplacement et une base arrière.

Etat de la Technique

Le problème technique adressé par la présente invention est celui de la dégradation ou de la perte de la connectivité sans-fil entre une base arrière (BA) et un véhicule de mission (VM) en déplacement. Un éloignement qui devient trop important entre une BA et un VM se déplaçant, peut ne plus préserver une connectivité de qualité entre la BA et le VM quand la seule liaison entre les deux objets est une liaison sans-fil directe, par exemple une liaison radio de type WiFi, LiFi ou d'une autre technologie de transmission.

En pratique de telles situations peuvent se rencontrer lorsque, pour les besoins d'une mission à réaliser, le VM doit être amené à se déplacer sur une surface assez grande (par exemple dans le cas de l'inspection d'une zone ouverte en extérieure) ou lorsque le VM doit se déplacer dans des environnements limitant la propagation des communications sans-fil (par exemple dans des environnements fortement métalliques qui contraignent la propagation du signal radio, tels qu'un immeuble avec des murs en bétons armés ou autres).

Les applications sont nombreuses, et exigent de maintenir une qualité suffisante de connectivité sans-fil entre le VM se déplaçant et sa base arrière, pour pouvoir acheminer entre le VM et la BA de manière bidirectionnelle des données requises par la mission du VM, malgré le déplacement du VM.

Des solutions approchent cette problématique en proposant de construire un réseau d'interconnexion sans-fil multi-sauts entre une base arrière et un véhicule en déplacement. Ainsi, la demande de brevet WO2015/086331 de la Demanderesse, propose de mettre en place des nœuds relais de communication entre la BA et le VM au fur et à mesure que le VM se déplace. Les relais de communication constituant les nœuds relais du réseau multi-sauts entre le VM et la BA sont des objets communicants transportés par le VM, ce dernier étant apte à les déployer, i.e. les déposer au sol, lorsque cela est nécessaire. L'inconvénient de cette solution est qu'elle requière une adaptation matérielle du VM qui doit transporter les relais pour assurer leur déploiement. Par ailleurs, les objets communicants déployés par le VM n'ont pas la capacité d'adapter leur localisation une fois déposés.

L'article "Relay Vehicle Formations for Optimizing Communication Quality in Robot Networks" - IEEE 2017, Mahbubur Rahman, Leonardo Bobadilla, Franklin Abodo, Brian Rapp - décrit l'utilisation de robots relais pour établir un lien de communication entre un opérateur statique et des unités terminales distantes dans un environnement comportant des obstacles connus. La position de chaque robot relais est déterminée sur la carte au moyen d'un plan afin de maximiser la qualité de la communication entre l'opérateur et les unités terminales distantes. La structure qui en résulte est calculée une seule fois et réutilisée tout au long de la mission, ce qui réduit significativement le temps de recalcule du plan. Dans un exemple, les robots relais sont disposés en file.

Aussi, il existe un besoin pour une solution qui lève les inconvénients des solutions connues et qui permette de préserver une connectivité sans- fil de qualité entre une Base Arrière (BA) et un Véhicule de Mission (VM) en déplacement, sans contraindre les possibilités de déplacement du VM.

La présente invention répond à ces besoins.

Résumé de l'invention

Un objet de la présente invention est un procédé de déploiement automatique d'un réseau de télécommunication, en vue de maintenir la connectivité sans-fil entre un véhicule de mission (VM) en déplacement et une base arrière (BA).

De manière générale, l'invention s'appuie sur un ensemble d'équipements appelés « Relais de Communication Robotisé Autonome » (RCRA), chaque équipement étant apte à se déplacer de manière autonome le long d'une trajectoire suivie par un VM et un ensemble d'équipements déployés le long de la trajectoire du VM formant un réseau de communication sans-fil linéaire maillé (ou « mesh » en anglais ou multi-sauts), entre le VM et la base arrière.

Avantageusement le procédé de l'invention permet de contrôler de manière automatique le positionnement de chaque RCRA le long de la trajectoire d'un VM, ainsi que l'ajout si besoin de tout nouveau RCRA, de manière à préserver la connectivité sans-fil entre le VM et la BA, et à assurer que la connectivité soit de qualité suffisante pour acheminer de manière bidirectionnelle entre le VM et la BA, les données requises dans le cadre de la mission du VM, malgré le déplacement du VM.

Avantageusement le procédé de l'invention permet à un VM, via le déploiement automatique de RCRAs le long de sa trajectoire, de rester connecté à une BA même si la connectivité directe entre le VM et la BA est perdue (par exemple, en limite de couverture du signal radio).

Ainsi, grâce au procédé de l'invention, un VM peut parcourir des distances plus importantes ou pénétrer dans des environnements plus hostiles, tels que des environnements fortement métalliques qui contraignent la propagation du signal radio, tout en préservant une connectivité de qualité avec une BA pour la transmission de données.

Dans un mode de réalisation, l'invention comprend un mode dit de repli qui permet, lorsqu'un VM rebrousse chemin selon sa trajectoire initiale, un repli automatique des RCRAs qui ont été déployés le long de cette même trajectoire, et un démantèlement progressif du réseau maillé formé par les RCRAs déployés, au fur et à mesure du retrait des RCRAs du réseau maillé dès lors qu'ils ne sont plus nécessaires pour préserver la connectivité de qualité entre le VM et une BA.

Le mode de repli est particulièrement avantageux car il permet de limiter le nombre de RCRA à déployer afin de permettre à un VM de rejoindre son point initial en fin de mission (typiquement il permet de diviser par deux ce nombre par rapport à une configuration sans mode de repli).

De plus, le mode de repli est particulièrement intéressant lorsqu'un VM circule dans un environnement extrêmement exigu (par exemple un couloir) qui ne permet pas physiquement à un VM et un RCRA de se croiser.

Avantageusement, la présente invention ne requiert aucune adaptation d'un VM pour assurer le déploiement de nœuds relais RCRA, ces nœuds relais étant des équipements robotisés aptes à se déplacer de manière autonome dans l'environnement. De plus, les nœuds relais robotisés mobiles (RCRAs) adaptent automatiquement leur localisation lors du déplacement du VM afin de préserver une connectivité de qualité entre le VM et la BA.

Avantageusement, le dispositif de l'invention ne requérant aucune adaptation matérielle du VM, sa mise en œuvre est grandement facilitée ainsi que son applicabilité à tout type de scénario applicatif. Une implémentation de l'invention peut être sous la forme d'un système générique d'extension de connectivité sans-fil apte à s'interfacer simplement et très rapidement avec tout type de VM.

Les domaines d'application industrielle de l'invention sont multiples et couvrent sans limitation des solutions d'inspection, de surveillance, d'intervention robotisées pour des besoins de sécurité, de défense, de premier secours, ou des besoins industriels plus spécifiques comme par exemple un démantèlement nucléaire.

Pour obtenir les résultats recherchés, il est proposé un procédé de déploiement automatique d'un réseau de communication entre un véhicule mobile VM et une base arrière BA, le véhicule mobile se déplaçant depuis une position initiale le long d'une trajectoire T, le déploiement consistant à positionner une pluralité d'équipements relais de communication le long de la trajectoire du VM pour former entre le VM et la base arrière un réseau de communication bidirectionnelle, sans-fil linéaire maillé, tel que les communications entre le véhicule mobile et la base arrière ont une qualité de lien de communication Q égale ou supérieure à une valeur seuil S, chaque équipement relais de communication étant un équipement mobile autonome dit Relais de Communication Robotisé Autonome RCRA, apte à se déplacer de manière autonome et se positionner le long de la trajectoire T suivie par le VM, le procédé comprenant des étapes consistant à :

(a) déterminer quand la qualité de lien de communication entre la base arrière et un dernier relais de communication RCRA(N) positionné sur la trajectoire T, est inférieure à la valeur seuil S, ledit RCRA(N) étant considéré comme le Père de la base arrière BA tel que Père(BA) = N ;

(b) positionner un nouveau relais de communication RCRA(N+1) le long de la trajectoire T, entre la base arrière BA et le dernier relais de communication RCRA(N), la position du nouveau relais de communication RCRA(N+1) étant déterminée pour établir une qualité de lien de communication entre le RCRA(N+1) et la BA à une valeur égale ou supérieure à la valeur seuil S ;

(c) configurer les relais de communication RCRAs du réseau positionnés sur la trajectoire T, la base arrière BA et le véhicule mobile VM, pour définir que le nouveau relais de communication RCRA(N+1) devient le Père de la BA tel que Père(BA) = (N+1) et définir que le réseau sans-fil linéaire maillé entre le VM et la base arrière BA est mis à jour avec l'ajout du nouveau relais de communication RCRA(N+1) positionné entre la BA et le RCRAN ; et

(d) répéter les étapes (a) à (c).

Selon des modes de réalisation alternatifs ou combinés :

- l'étape de positionner un nouveau relais de communication RCRA(N+1) comprend une première étape consistant à activer le déplacement du nouveau relais de communication RCRA(N+1) depuis une zone de réserve vers la position initiale de la trajectoire T, la zone de réserve regroupant une pluralité de relais de communication.

- l'étape de configuration des relais de communication RCRAs du réseau positionnés sur la trajectoire T, comprend des étapes de configuration du nouveau relais de communication RCRA(N+1) consistant à :

  - reconfigurer une table de routage (406) du RCRA(N+1) pour indiquer que le RCRA(N) est directement joignable et qu'il est le prochain relais pour joindre tous les autres RCRA du réseau et le VM ;

  - identifier que le Père du RCRA(N+1) est le RCRA(N), et (708-3) que le Fils du RCRA(N+1) est la BA ;

  - activer un module (414) de réception de la trajectoire T du VM depuis le RCRA(N) ;

- activer un module (416) d'émission de la trajectoire du VM vers la BA ; et

- activer un module (418) de surveillance de la qualité du lien direct avec son Père le RCRA(N).

- l'étape de configuration des relais de communication du réseau positionnés sur la trajectoire T, comprend des étapes de configuration du dernier relais de communication RCRA(N) positionné sur la trajectoire T, consistant à :

- reconfigurer une table de routage (406) du RCRA(N) pour indiquer que le RCRA(N+1) est directement joignable et que la BA est joignable via le nouveau relais de communication RCRA(N+1) ;

- identifier que le Fils du RCRA(N) est le RCRA(N+1) ; et

- reconfigurer un module (416) d'émission de la trajectoire de VM pour activer la transmission de la trajectoire vers le nouveau Fils RCRA(N+1) du RCRA(N).

- l'étape de configuration de la base arrière BA, comprend des étapes consistant à :

- ajouter le nouveau relais de communication RCRA(N+1) à une liste 'L' des RCRAs intégrés au réseau sans-fil linéaire maillé ;

- reconfigurer une table de routage (306) de la BA pour indiquer que tous les RCRAs inclus dans la liste 'L', autres que le nouveau relais de communication RCRA(N+1), sont joignables via le nouveau relais de communication RCRA(N+1), et que le véhicule mobile VM est joignable via le nouveau relais de communication RCRA(N+1) ;

- identifier que le Père de la base arrière BA est le nouveau relais de communication RCRA(N+1) ; et

- configurer un module (310) de réception de la trajectoire de VM pour activer la réception de la trajectoire depuis le nouveau Père RCRA(N+1).

- l'étape de configuration du nouveau relais de communication RCRA(N+1) comprend de plus une étape consistant à transmettre au nouveau relais de communication, l'intégralité de la trajectoire T de VM.

- l'étape de configuration des relais de communication RCRA du réseau sans-fil linéaire maillé, comprend de plus des étapes permettant à chaque relais positionné le long de la trajectoire T du VM de :

- surveiller la qualité du lien de communication entre lui et son Père ; et

- avancer de manière autonome sur la trajectoire T quand la qualité du lien est inférieure à la valeur seuil S.

- l'étape de surveillance comprend de plus une étape consistant à surveiller la distance entre lui et son Père, et l'étape d'avancement consiste à avancer quand la qualité du lien est inférieure à la valeur seuil S et que la distance entre lui et son Père est supérieure à une distance de sécurité ds.

- le procédé comprend de plus une étape consistant à calculer une nouvelle valeur S du seuil de qualité avant l'étape de configuration.

- le procédé comprend de plus des étapes permettant un repli progressif et automatique des relais de communication positionnés sur la trajectoire T du véhicule mobile VM, lorsqu'un VM rebrousse chemin selon sa trajectoire initiale, le repli des relais de communication entrainant un démantèlement du réseau sans-fil linéaire maillé.

L'invention concerne aussi un dispositif pour le déploiement automatique d'un réseau de communication entre un véhicule mobile VM et une base arrière BA, le véhicule mobile se déplaçant depuis une position initiale le long d'une trajectoire T, le déploiement consistant à positionner une pluralité d'équipements relais de communication le long de la trajectoire du VM pour former entre le VM et la base arrière un réseau de communication bidirectionnelle, sans-fil linéaire maillé, tel que les communications entre le véhicule mobile et la base arrière ont une qualité de lien de communication Q égale ou supérieure à une valeur seuil S, chaque équipement relais de communication étant un équipement mobile autonome dit Relais de Communication Robotisé Autonome RCRA, apte à se déplacer de manière autonome et se positionner le long de la trajectoire T suivie par le VM, le dispositif comprenant des moyens pour mettre en œuvre les étapes du procédé de l'invention.
Selon des variantes de réalisation du dispositif de l'invention, le véhicule mobile est un véhicule terrestre ou aérien ou amphibie ou aquatique, ledit véhicule étant piloté ou télé-piloté ou auto-piloté.
Dans une réalisation avantageuse, le réseau de communication bidirectionnelle, sans-fil linéaire maillé, est implémenté selon une architecture orientée « Software Defined Networking » SDN comprenant un contrôleur SDN ayant une Interface Nord et une Interface Sud, mis en place au niveau de la base arrière BA. Le contrôleur SDN est apte à piloter via son Interface Sud les configurations d'équipements SDN constitués par la BA, le VM et l'ensemble des RCRAs, et apte à mettre en œuvre sous la forme d'un Service SDN via son Interface Nord les étapes du procédé de l'invention.

L'invention concerne aussi un produit programme d'ordinateur qui comprend des instructions de code permettant d'effectuer les étapes du procédé de l'invention, lorsque le programme est exécuté sur un ordinateur.

Description des figures

D'autres caractéristiques et avantages de l'invention apparaîtront à l'aide de la description qui suit et des figures des dessins annexés dans lesquels :

La [FIG. 1] illustre différents exemples de contexte d'application de l'invention, mettant en œuvre une communication entre un Véhicule de Mission (VM) et une Base Arrière (BA) ;

La [FIG. 2a] illustre un ensemble de RCRAs déployés sur la trajectoire d'un VM dans un mode de réalisation ;

La [FIG. 2b] illustre l'ajout d'un RCRA au réseau de communication sans- fil linéaire maillé entre la BA et le VM de la figure 2a ;

La [FIG. 3] illustre les caractéristiques fonctionnelles principales d'une base arrière (BA) dans un mode de réalisation ;

La [FIG. 4] illustre les caractéristiques fonctionnelles principales d'un relais de communication robotisé autonome (RCRA) dans un mode de réalisation ;

La [FIG. 5] illustre les caractéristiques fonctionnelles principales d'un véhicule de mission (VM) dans un mode de réalisation;

La [FIG. 6a] est un organigramme des étapes opérées par un RCRA intégré dans un réseau de communication sans- fil linéaire maillé entre une BA et un VM ;

La [FIG. 6b] est un organigramme d'une variante du procédé de la figure 6a ;

La [FIG. 7] est un organigramme des étapes opérées par une BA pour intégrer un nouveau RCRA dans un réseau de communication sans- fil linéaire maillé entre une BA et un VM ;

Les [FIG. 8a] et [FIG. 8b] sont des organigrammes détaillant des étapes du procédé de la figure 7 ;

La [FIG. 9] est un organigramme des étapes opérées par un RCRA en mode repli ; et

Les [FIG. 10a] et [FIG. 10b] sont des organigrammes détaillant des étapes opérées par une BA pour démanteler un réseau de RCRAs en mode repli.

Description détaillée de l'invention

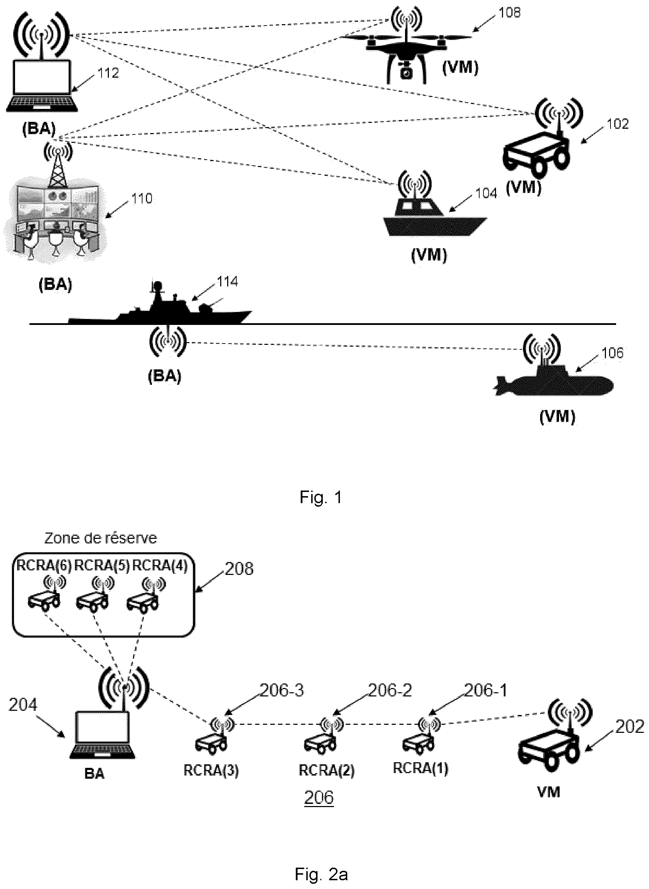

La figure 1 illustre différents exemples de contexte d'application de l'invention, mettant en œuvre une communication entre un Véhicule de Mission (VM) et une Base Arrière (BA).

Dans le contexte de l'invention, l'expression « véhicule de mission » (VM) est à prendre dans son sens le plus large et peut désigner tout engin mobile que ce soit un véhicule terrestre (102), maritime (104, 106), aérien (108), un véhicule civil ou militaire, etc... qui se déplace pour effectuer une mission.

Une mission effectuée par un VM peut être sans limitation :

- une mission de secours : telle que l'inspection d'une zone ayant subi un incident (par exemple un incendie, une inondation, un tremblement de terre...), la recherche et la localisation de victimes... ;

- une mission de sécurité : telle que la surveillance d'une zone (par exemple une frontière...), la détection et la localisation d'alerte de sécurité (par exemple des entrées non autorisées dans une zone...) ;

- une mission industrielle : telle que la prise en charge du démantèlement d'une installation critique (par exemple un site nucléaire) ; ou

- tout autre type de mission.

De plus, un véhicule dans le contexte de l'invention peut être un véhicule piloté par une personne (104, 106) ou télé-opéré à distance (108) ou encore un véhicule autonome (102) apte à se déplacer seul dans son environnement selon un objectif de mission (par exemple suivre une trajectoire prédéfinie dans une zone donnée).

Ainsi sans limitation, un VM peut être :

- un véhicule volant tel qu'un drone (télé-opéré ou autonome), un avion... ;

- un véhicule terrestre, quel que soit son mode de locomotion (par exemple équipé de roues, de chenilles...), tel qu'un robot mobile d'inspection... ;

- un véhicule flottant tel qu'un bateau, un drone... ;

- un véhicule sous-marin, ...

Dans le contexte de l'invention, une « base arrière » (BA) peut désigner tout système configuré pour être en communication avec un véhicule de mission.

La communication entre une BA et un/des VM(s) peut être basée sur tout type de technologie de transmission sans-fil, telles que par exemple des transmissions radio dans tout type de bande RF (par exemple transmission WiFi ad-hoc), des transmissions sur la partie visible du spectre électromagnétique (par exemple des transmissions LiFi) ou encore des transmissions acoustique (par exemple sous l'eau).

Une BA peut être fixe (110, 112) ou mobile (114), p.ex. telle qu'un bateau en charge de communiquer avec des sous-marins.

Ainsi une BA peut prendre différentes formes telles que par exemple :

- un serveur dans l'internet ou une plateforme « cloud » en charge de réceptionner (et potentiellement stocker et/ou traiter) les données collectées et transmises par le VM lors de son déplacement ;

- un centre de contrôle, de supervision par exemple en charge de superviser un ou plusieurs drones autonomes (par exemple une flotte de drones) ; dans ce cadre les échanges de données entre la BA et le(s) VM(s) peuvent être par exemple des instructions de mission (par exemple une trajectoire à suivre) transmises au(x) drone(s) ou encore des données (par exemple vidéos, photos, alertes de détection d'évènement...) collectées par le(s) drone(s) et transmises à la BA ;

- un pupitre de contrôle (ou télécommande) de téléopération d'un drone ou robot permettant de télépiloter le drone/robot à distance et de visualiser un flux vidéo capturé par le drone/robot ;

- etc.

Ainsi, la présente invention peut s'implémenter avec des variantes de ces configurations et peut s'appliquer aux multiples scénarios évoqués ou à d'autres définis par de nouvelles missions.

La figure 2a illustre un exemple d'un réseau de communication établi entre un VM (202) et une BA (204) par la mise en place de plusieurs « Relais de Communication Robotisés Autonomes ou RCRA » (206) déployés sur la trajectoire du VM au cours de son déplacement.

Avantageusement, le procédé de déploiement d'un réseau de communication selon l'invention permet une configuration automatique d'un réseau de communication sans-fil linéaire maillé entre le VM et le BA, ce réseau pouvant être constitué d'une pluralité de RCRAs, permettant ainsi d'étendre la couverture sans-fil entre le VM et la BA et permettre aux deux entités de rester connectées sans contraindre le VM dans ses déplacements.

Un dispositif RCRA selon l'invention est une entité apte à se déplacer de manière autonome le long de la trajectoire suivie par le VM et stationner à une position qui est calculée pour permettre d'établir, en tant que relais de communication, une communication sans-fil linéaire multi-saut entre le VM et la base arrière. Un RCRA selon les applications peut être un dispositif terrestre, aérien effectuant un vol stationnaire tel qu'un drone, un dispositif flottant ou sous-marin.

Selon des variantes de réalisation, les RCRAs peuvent être équipés de tout type de capteurs ou actionneurs potentiellement utiles au VM dans le cadre de la réalisation de sa mission. Le VM peut alors, grâce au réseau sans-fil linéaire, collecter les informations issues de ces capteurs supplémentaires lui permettant ainsi « d'augmenter » sa perception le long de sa trajectoire passée. De la même manière le VM peut alors, encore grâce au réseau sans-fil linéaire, contrôler les actionneurs des RCRAs et ainsi « augmenter » sa capacité d'action le long de sa trajectoire passée.

Ainsi, la figure 2a montre une situation où le VM qui a déjà évolué sur sa trajectoire depuis son départ où il était en communication directe avec la BA, a nécessité le déploiement de trois relais de communication RCRA(1) (206-1), RCRA(2) (206-2), RCRA(3) (206-3) afin de maintenir une connectivité sans fil de qualité entre lui-même et la BA (204).

Le procédé selon l'invention permet de calculer de manière automatique le positionnement de chaque RCRA à déployer le long de la trajectoire du VM, ainsi que l'ajout si besoin d'un nouveau RCRA, de manière à préserver la connectivité sans-fil entre le VM et la BA et à assurer que celle-ci soit de qualité suffisante pour acheminer de manière bidirectionnelle les échanges de données entre le VM et la BA malgré le déplacement du VM.

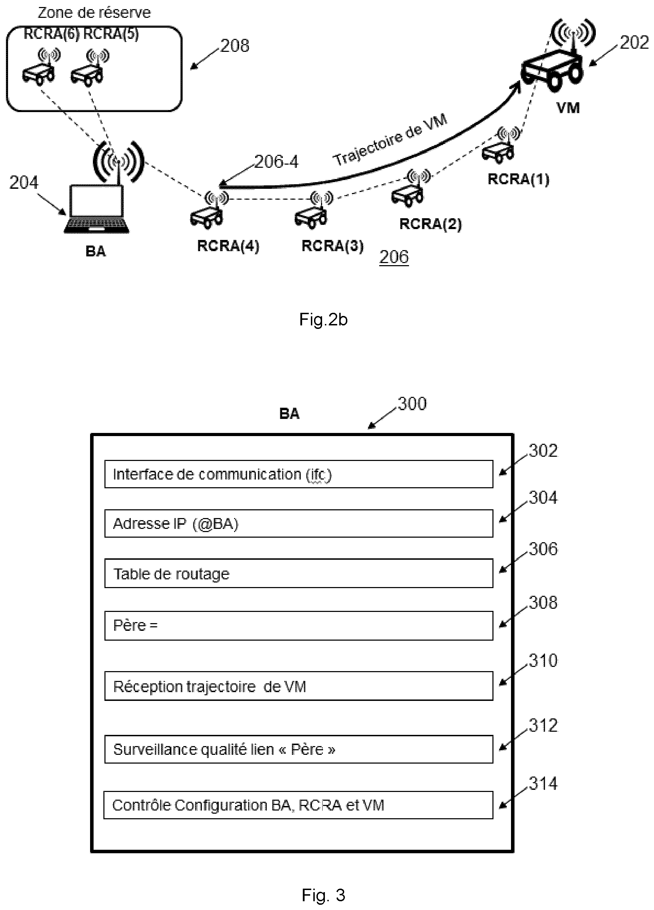

La figure 2b illustre une situation postérieure à la figure 2a où le VM s'étant déplacé, il a été déterminé que pour maintenir un niveau de qualité suffisante des communications, un nouveau RCRA (206-4) devait être ajouté au réseau de communication sans-fil linéaire maillé-saut établi entre le VM (202) et la BA (204).

L'exemple pris pour les figures 2a et 2b est simplifié pour permettre de décrire les principes de l'invention, mais l'homme du métier comprend que tout autre déploiement de RCRAs en nombre et position sur la trajectoire d'un VM n'est pas limité par cet exemple.

Dans un mode de réalisation, les RCRAs sont regroupés dans une zone dite zone de réserve (208) d'où ils peuvent partir pour aller se positionner de manière autonome à la position prévue qui est calculée lors du déplacement du VM. Ainsi selon les exemples illustrés, la zone de réserve (208) contient trois RCRAs en attente sur la figure 2a, et n'en contient plus que deux sur la figure 2b après l'envoi du RCRA(4) à la position qui lui a été calculée.

La figure 3 illustre un module (300) des principales caractéristiques fonctionnelles d'une base arrière (BA) permettant de mettre en œuvre le procédé de l'invention dans un mode de réalisation.

Le module fonctionnel (300) d'une BA comprend une interface de communication (ifc) associée à une adresse IP (IPv4 ou IPv6) dénommée « @BA » (304). Cette interface de communication (302) permet à la BA de communiquer :

- avec les RCRAs localisés dans la zone de réserve et qui sont à portée sans-fil directe de la BA (c'est-à-dire ne nécessitant pas un relayage des communications) ;

- avec un VM au démarrage de la mission (quand la BA et le VM sont en portée sans-fil directe) ;

- avec un RCRA positionné en queue de file (le dernier RCRA ajouté au réseau sans-fil linéaire maillé) et qui est également en portée sans-fil directe avec la BA.

Le module fonctionnel (300) d'une BA comprend aussi une table de routage (306) permettant de router les flux de données de la BA vers un VM, ainsi que les commandes de contrôle des configurations de VM et des RCRAs. La table de routage permet d'indiquer pour une adresse de destination donnée (par exemple l'adresse d'un VM), si elle est joignable directement via l'interface ifc (302) ou bien s'il faut acheminer les communications via un relai, ce qui peut être indiqué par une mention de « NextHop » dans la table de routage.

La table de routage (306) peut également inclure une entrée par défaut qui permet de router tous les flux à destination d'une adresse IP pour lesquels la table de routage ne contient pas d'entrée de routage spécifique.

Au démarrage d'une mission, la table de routage d'une BA est configurée en mode « par défaut », de la manière suivante :

Défaut ➔ NextHop = <vide> via ifc

Ainsi, tous les RCRAs en zone de réserve et le VM sont joignables en portée sans-fil directe via l'interface ifc de BA à l'initialisation.

Le module fonctionnel (300) d'une BA comprend aussi un sous-module (308) désigné par le champ « Père » (308) permettant de tracer la relation de connectivité de la BA vers un VM, via les éventuels multiples RCRAs, au travers du réseau de communication sans-fil linéaire maillé. Au démarrage d'une mission, le champ « Père » est configuré avec l'identifiant du VM (par exemple l'adresse IP de VM : @VM), puis est mis à jour au fur et à mesure du déplacement du VM avec l'identifiant du dernier RCRA (par exemple l'adresse IP de ce RCRA) ajouté au réseau sans-fil linéaire, le dernier RCRA constituant le premier point de relayage des communications adressées à VM, et est donc le « Père » de la BA.

Le module fonctionnel (300) d'une BA comprend aussi un sous-module (310) de réception de la trajectoire du VM (la trajectoire étant transmise par le VM). Le module de réception de trajectoire (310) permet à la BA de stocker la trajectoire (T) du VM depuis le point initial de départ du VM et tout au long de son déplacement. Les données de trajectoire qui sont stockées sont transmises par la BA à un nouveau RCRA (initialement en zone de réserve) pour le configurer en vue de l'intégrer au réseau sans-fil linéaire. Dans un mode de réalisation, la trajectoire T d'un VM peut être matérialisée sous la forme d'une séquence temporelle de positions successives du VM déterminées à des intervalles de temps réguliers (par exemple chaque 100 millisecondes). La trajectoire T du VM n'est pas nécessairement prédéfinie, celle-ci peut être adaptative selon les besoins et contraintes de la mission à accomplir par le VM. Un VM, qu'il soit conduit, télécommandé, ou autonome, peut par exemple adapter sa trajectoire pour éviter un obstacle ou simplement parce que l'objectif de sa mission (par exemple une zone cible à atteindre, à inspecter...) a changé.

Le module fonctionnel (300) d'une BA comprend aussi un sous-module (312) de surveillance de la qualité du lien de communication sans-fil directe entre la BA et son « Père ». Ce module (312) permet d'anticiper la perte ou la dégradation prochaine de ce lien direct par analyse de la qualité du lien de communication, afin de permettre le rajout d'un RCRA supplémentaire au réseau sans-fil linéaire quand la qualité tombe en dessous d'un certain seuil S.

Dans un mode de réalisation, le seuil S est prédéfini au début de la mission, il est le même pour tous les équipements du réseau sans-fil linéaire (la BA, les RCRAs, le VM) et il reste constant tout au long de la mission.

Dans une variante de réalisation, le seuil S est prédéfini au début de la mission, il est le même pour tous les équipements du réseau sans-fil linéaire (la BA, les RCRAs, le VM), mais il est (1) dynamiquement recalculé par la BA à chaque fois qu'un RCRA est rajouté ou retiré du réseau sans-fil linéaire et (2) poussé dynamiquement vers les équipements encore présents dans le réseau sans-fil linéaire (la BA, les RCRAs, le VM) lors de leurs reconfigurations. Dans cette variante, le calcul du nouveau seuil S à appliquer peut-être déterminé sur la base d'un objectif de qualité de la communication de bout en bout entre un VM et la BA (par exemple un objectif de débit ou de latence...) et du nombre de RCRAs présents dans le réseau sans-fil linéaire.

A titre d'illustration de cette variante, le fait de rajouter un RCRA, et donc un niveau de relayage supplémentaire des communications entre une BA et un VM, peut réduire le débit maximum disponible de bout en bout entre la BA et le VM si le seuil S n'est pas ajusté. Par contre, en ajustant le seuil S de manière à améliorer la qualité de la connectivité du lien direct entre chaque Fils et son Père au sein du réseau sans-fil linéaire (par exemple en imposant une qualité du signal radio supérieure entre le Fils et le Père, et donc potentiellement une distance maximale plus faible entre les deux) il est possible d'augmenter le débit disponible entre chaque Fils et son Père, et donc le débit disponible de bout en bout entre la BA et le VM, et ainsi contrebalancer l'ajout d'un RCRA. Chacun des RCRAs du réseau sans-fil linéaire va réajuster sa position le long de la trajectoire T du VM pour respecter ce nouveau seuil S une fois qu'il aura été configuré.

Le module fonctionnel (300) d'une BA comprend aussi un sous-module (314) de contrôle des configurations de la BA, de chacun des RCRAs (situés en zone de réserve ou intégrés au réseau sans-fil linéaire) et du VM.

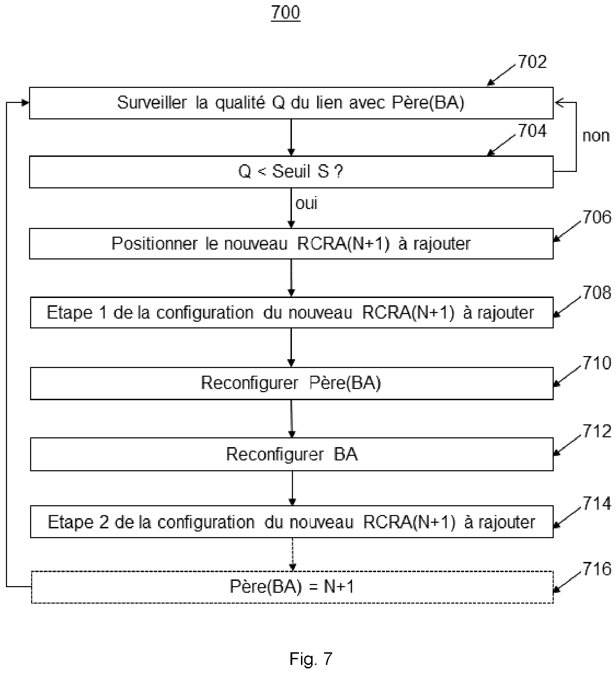

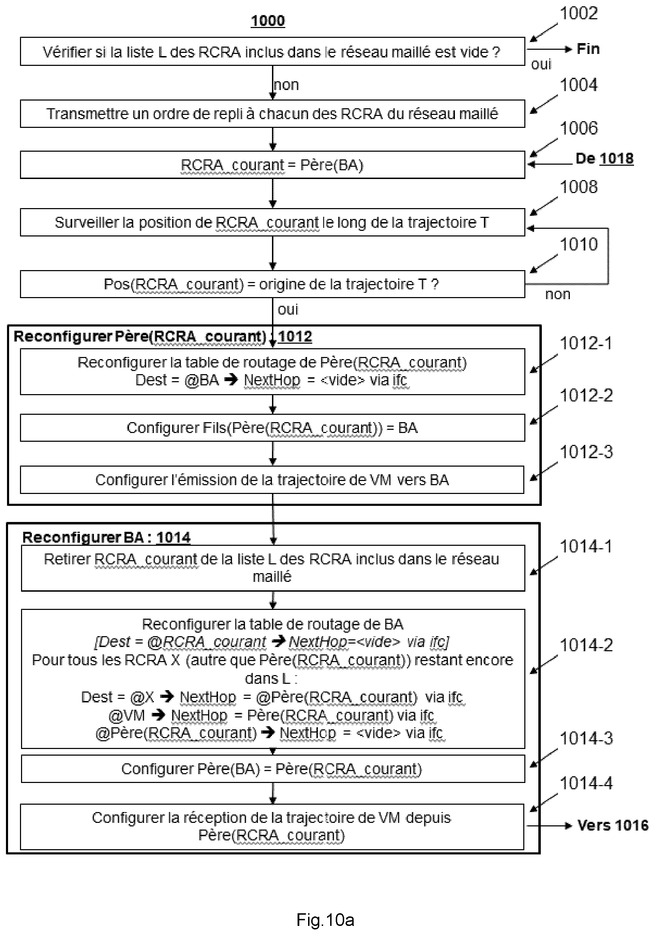

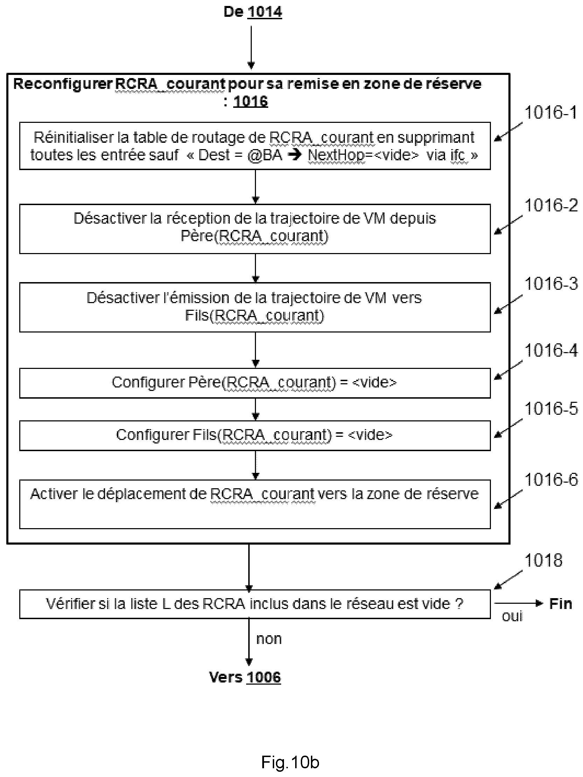

Le module de contrôle de configuration (314) comprend des instructions de code pour exécuter des opérations pour intégrer lorsque cela est nécessaire, un nouveau RCRA au réseau de communication sans-fil linéaire maillé entre le VM et la BA (procédé décrit en référence à la figure 7), et pour exécuter des opérations pour démanteler progressivement le réseau de RCRA entre la BA et le VM en mode de repli (procédé décrit en référence aux figures 10a et 10b).

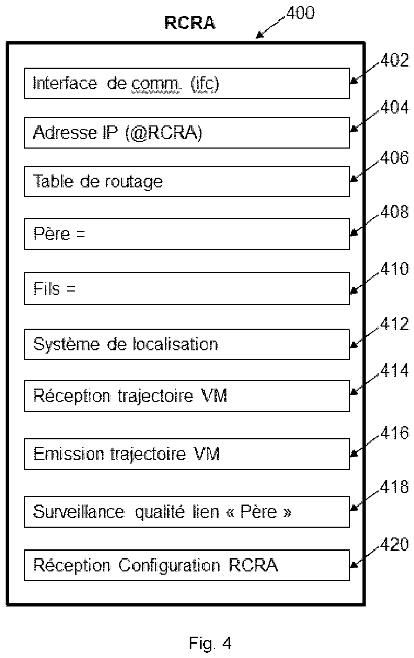

La figure 4 illustre un module (400) des principales caractéristiques fonctionnelles d'un relais de communication robotisé autonome (RCRA) permettant de mettre en œuvre le procédé de l'invention dans un mode de réalisation.

Le module fonctionnel (400) d'un RCRA comprend une interface de communication (ifc) associée à une adresse IP (IPv4 ou IPv6) dénommée « @RCRA » (404). Cette interface de communication (402) permet à un RCRA de communiquer :

- avec une BA au démarrage de la mission lorsqu'il est en zone de réserve (la BA étant en portée sans-fil directe) ;

- avec ses voisins (la BA, le VM ou d'autres RCRA) selon sa position dans le réseau sans-fil linéaire dès lors que le RCRA a été rajouté au réseau.

Le module fonctionnel RCRA (400) comprend de plus une table de routage (406) permettant de router les communications entre une BA, un VM et les autres RCRAs éventuellement présents dans le réseau sans-fil linéaire.

Au démarrage d'une mission, la table de routage d'un RCRA (qui est alors en zone de réserve) est configurée pour indiquer que la BA est joignable en portée sans-fil directe via l'interface ifc du RCRA, de la manière suivante :

@BA ➜ NextHop = <vide> via ifc

Le module fonctionnel (400) d'un RCRA comprend aussi deux sous-modules (408, 410) désignés par les champs « Père » (408) et « Fils » (410) qui sont utilisés pour tracer la relation de connectivité d'une BA vers un VM au travers du réseau de communication sans-fil linéaire maillé lorsque le RCRA est intégré au réseau.

Au démarrage de la mission les champs Père (408) et Fils (410) de chaque RCRA (qui sont alors en zone de réserve) sont vides. Dès qu'un RCRA doit être intégré au réseau sans-fil linéaire, ses champs Père et Fils sont complétés avec les identifiants de ses voisins dans le réseau. Le champ Père est renseigné avec l'identifiant du RCRA qui est le RCRA voisin en amont vers le VM (ou être renseigné avec l'identifiant du VM lui-même si le RCRA est le premier intégré au réseau), et le champ Fils est renseigné avec l'identifiant d'un RCRA voisin qui sera le RCRA voisin en aval vers la BA (ou être renseigné avec l'identifiant de la BA elle-même).

Le module fonctionnel (400) d'un RCRA comprend aussi un système de localisation (412) (qui peut être identique à celui d'un VM), lui permettant de connaitre à tout instant sa position dans l'environnement dans lequel il évolue. Avantageusement dans le contexte de l'invention, le système de localisation permet au RCRA de pouvoir se positionner le long de la trajectoire T qu'il reçoit du VM via un sous-module de « réception de trajectoire VM » (414).

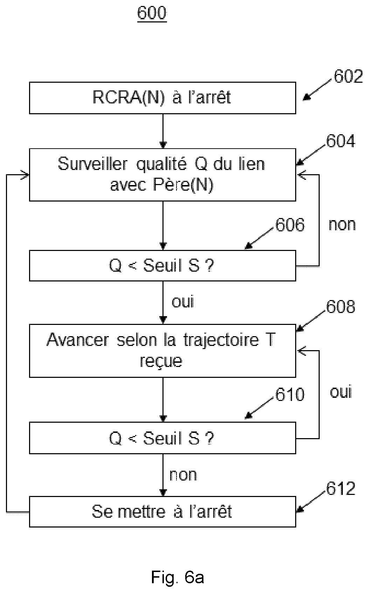

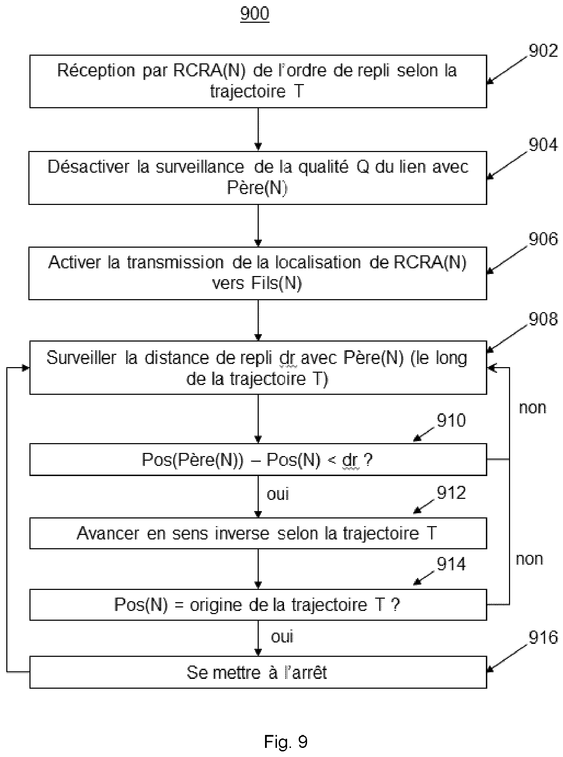

Au démarrage d'une mission, tous les RCRA étant en zone de réserve, aucun d'eux ne reçoit la trajectoire T du VM. Dès qu'un RCRA est intégré dans le réseau sans-fil linéaire, il peut alors recevoir la trajectoire T du VM et progresser de manière autonome le long de cette trajectoire suivant la mise en œuvre de sous-procédés décrits en référence aux figures 6a et 9.

Le module fonctionnel (400) d'un RCRA comprend aussi un sous-module (416) d'émission de la trajectoire T d'un VM vers son « Fils » (la BA ou le RCRA voisin précédent vers la BA dans le réseau sans-fil linéaire). Le module (416) d'émission de la trajectoire T d'un VM est utilisé dès lors que le RCRA est intégré au réseau sans-fil linéaire.

Le module fonctionnel (400) d'un RCRA comprend de plus un sous-module (418) de surveillance de la qualité du lien de communication sans-fil directe entre lui-même et son « Père ». Ce module (418) est utilisé dès lors que le RCRA est intégré au réseau sans-fil linéaire, permettant ainsi à ce RCRA d'anticiper la perte ou la dégradation prochaine du lien de communication direct avec son « Père » et d'ajuster en conséquence sa position sur la trajectoire T de VM (principalement en vue de se rapprocher de son Père) de manière à préserver une connectivité de qualité entre le RCRA et son Père. Ce module est utilisé dans le procédé décrit en référence à la figure 6a.

Le module fonctionnel (400) d'un RCRA comprend de plus un sous-module (420) de « réception de la configuration de RCRA » transmise par la BA. Ce module est activé par le procédé décrit à la figure 7 des opérations d'une BA pour intégrer un nouvel RCRA au réseau de communication sans-fil linéaire maillé entre le VM et la BA, lorsque nécessaire. Il est aussi activé par le procédé décrit aux figures 10a et 10b des opérations d'une BA pour démanteler progressivement le réseau de RCRA entre la BA et le VM en mode de repli.

Il est à noter qu'un changement de configuration d'un RCRA est nécessaire dès lors qu'il est inséré dans le réseau sans-fil linéaire (depuis la zone de réserve), ou qu'il est retiré du réseau sans-fil linéaire (pour réintégrer la zone de réserve) ou qu'un autre RCRA voisin direct de ce RCRA doit être intégré ou retiré du réseau sans-fil linéaire.

Dans un mode de réalisation, un RCRA peut également être équipé de systèmes de détection d'obstacle ou d'anticollision pour lui éviter, lors de sa navigation autonome, de percuter des obstacles. De tels systèmes peuvent s'appuyer sur différents types de capteurs de perception de l'environnement tels que des caméras, radars, lidars ou autres...

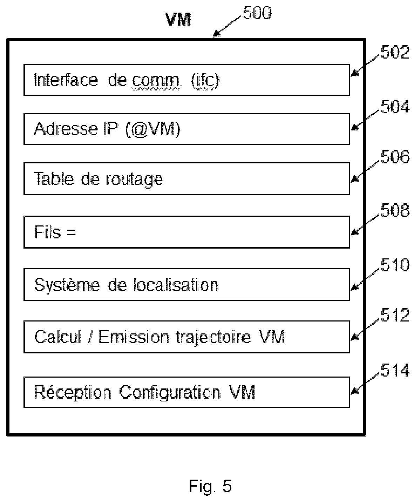

La figure 5 illustre un module (500) des principales caractéristiques fonctionnelles d'un véhicule de mission (VM) permettant de mettre en œuvre le procédé de l'invention dans un mode de réalisation.

Le module fonctionnel (500) d'un VM comprend une interface de communication (ifc) associée à une adresse IP (IPv4 ou IPv6) dénommée « @VM » (504). Cette interface de communication (502) permet à un VM de communiquer :

- avec une BA au démarrage de la mission, la BA et le VM étant en portée sans-fil directe ;

- avec le RCRA de tête de file (le premier rajouté au réseau sans-fil linéaire maillé) en portée sans-fil directe avec le VM, dès lors que le déplacement du VM ne permet plus à la BA et au VM de communiquer en portée sans-fil directe.

Le module fonctionnel (500) d'un VM comprend de plus une table de routage (506) permettant de router les flux de données du VM vers la BA. Cette table de routage permet d'indiquer, pour une adresse de destination donnée (par exemple celle de la BA), si elle est joignable directement via l'interface ifc ou bien s'il faut acheminer les communications via un relai (indiqué comme « NextHop » dans la table de routage).

Au démarrage d'une mission, la table de routage d'un VM est configurée pour indiquer que la BA est joignable en portée sans-fil directe via l'interface ifc du VM, de la manière suivante :

$$\text{@BA} \rightarrow \text{NextHop} = \text{<vide> via ifc}$$

Le module fonctionnel (500) d'un VM comprend aussi un sous-module (508) désigné par le champ « Fils » permettant de tracer la relation de connectivité de la BA vers un VM, via les éventuels multiples RCRAs, au travers du réseau de communication sans-fil linéaire maillé.

Au démarrage d'une mission, le champ « Fils » est configuré avec l'identifiant de la BA (par exemple l'adresse IP de la BA : @BA), puis il est mis à jour par l'identifiant du premier RCRA (par exemple l'adresse IP de ce RCRA) rajouté au réseau sans-fil linéaire et constituant le premier point de relayage des communications adressées à BA (ce RCRA est le « Fils » du VM).

Le module fonctionnel (500) d'un VM comprend aussi un système de localisation (510) lui permettant de connaitre à tout instant sa position dans l'environnement dans lequel il évolue.

Un système de localisation (510) équipant un VM (mais aussi un RCRA) peut être par exemple :

- un système de localisation par satellites : GPS, Galiléo, Glonass, etc. Dans ce cas l'information de position du VM peut être une coordonnée de position absolue par rapport au référentiel terrestre (par exemple un triplet : longitude, latitude, altitude...).

- un système de localisation via une infrastructure radio déployée au sol comme une infrastructure de localisation UWB (Ultra Wide Band).

- un système de localisation par vision exploitant une ou plusieurs caméras, notamment via des techniques de SLAM (« Simultaneous Localization And Mapping »). Dans ce cas, l'information de position du VM peut être une information de position relative par rapport à un point d'origine (par exemple la position du VM au début de la mission) ; cette information peut éventuellement être convertie en information de position absolue dès lors que la position au point d'origine selon un référentiel de localisation absolue est connue (par exemple les coordonnées GPS de la position à l'origine).

- un système hybride mixant plusieurs techniques de localisation tels que des systèmes par satellites, par SLAM, ou des systèmes exploitant d'autres types de capteurs (centrales inertielles, boussoles, accéléromètres, odomètres...).

Ainsi différents systèmes et techniques de localisation peuvent être utilisés de manière complémentaires selon l'environnement dans lequel évolue le VM, par exemple en exploitant directement un système GPS en environnement extérieur (là où la couverture GPS est disponible) et en basculant vers un système de localisation par SLAM (éventuellement couplé à d'autres capteurs) en environnement intérieur (là où la couverture GPS n'est pas disponible).

Le module fonctionnel (500) d'un VM comprend de plus un module (512) de calcul et d'émission de sa trajectoire T vers son « Fils » (la BA ou le premier RCRA rajouté au réseau sans-fil linéaire).

Dans un mode de réalisation, la trajectoire T d'un VM est matérialisée sous la forme d'une séquence temporelle de positions successives du VM, qui sont déterminées à des intervalles de temps réguliers (par exemple chaque 100 millisecondes).

Dans le cas d'un système de localisation par GPS, la trajectoire d'un VM peut être constituée d'une séquence temporelle de triplets (longitude, latitude, altitude) déterminée à des intervalles de temps réguliers (par exemple, des intervalles de 100 millisecondes) depuis le point de position initial du VM au début de la mission.

Le module fonctionnel (500) d'un VM comprend de plus un module (514) de réception de la configuration de VM transmise par la BA. Ce module est activé par le procédé décrit à la figure 7 des opérations d'une BA pour intégrer un nouvel RCRA au réseau de communication sans-fil linéaire maillé entre le VM et la BA, lorsque cela est nécessaire.

Ce module est aussi activé par le procédé décrit aux figures 10a et 10b des opérations d'une BA pour démanteler progressivement le réseau de RCRA entre la BA et le VM en mode de repli.

La figure 6a est un organigramme des étapes (600) opérées par un RCRA déjà intégré dans un réseau de communication sans- fil linéaire maillé, établi entre une BA et un VM, le long de la trajectoire d'un VM.

Le procédé (600) est décrit pour un RCRA 'N' qui peut être n'importe quel RCRA du réseau sans-fil linéaire. Les opérations permettent au RCRA 'N' d'anticiper la perte ou la dégradation prochaine du lien de communication direct avec son Père et d'ajuster en conséquence sa position sur la trajectoire T du VM (en vue de se rapprocher de son Père) de manière à préserver une connectivité de qualité entre lui et son Père, et donc préserver la qualité de la connectivité entre la BA et le VM.

Par défaut le RCRA est à l'arrêt (602). Grâce à son module (418) de surveillance de la qualité du lien de communication sans-fil direct entre lui-même et son « Père », le RCRA évalue (604) la qualité Q de la connectivité directe entre lui et son Père, par exemple à intervalles de temps réguliers. Si celle-ci passe sous un seuil prédéfini S (branche Oui de 606), alors le RCRA se met en mouvement (608) et progresse le long de la trajectoire T du VM en vue de se rapprocher de son Père, sinon le RCRA reste dans l'état (604) de surveiller la qualité de la connectivité (branche Non de 606). La trajectoire T du VM est connue du RCRA car il la reçoit de son Père via le module « Réception trajectoire VM » (414).

Plusieurs variantes sont possibles concernant l'étape (606) de détermination du dépassement d'un seuil S, relativement à la qualité du lien direct entre le RCRA 'N' et son Père. Ainsi, par exemple, la détermination peut se faire :

- Sur la base d'une seule mesure de la qualité directement comparée au seuil S ;

- Sur la base de plusieurs mesures consécutives (par exemple à intervalles de temps réguliers) et du calcul d'une moyenne de cette qualité, avec ensuite une comparaison de cette moyenne calculée au seuil S ;

- Sur la base de plusieurs mesures consécutives (par exemple 10 mesures à intervalles de temps réguliers) et du nombre de fois ou ces mesures dépassent le seuil S : si ce nombre dépasse lui-même un seuil prédéfini (par exemple 7 fois sur 10) alors il est considéré que la qualité du lien dépasse le seuil S. Cette approche présente l'avantage de palier aux variabilités éventuelles du canal de propagation des signaux entre le RCRA et son Père.

Pendant son déplacement le long de la trajectoire T, le procédé permet au RCRA de continuer à évaluer (610) la qualité de sa connectivité directe entre lui et son Père, et dès que la qualité Q repasse au-dessus du seuil S, le RCRA se remet à l'arrêt (612).

Ainsi, le RCRA adapte dynamiquement sa position le long de la trajectoire T du VM de manière à préserver une connectivité de qualité entre lui-même et son Père.

Différents et plusieurs indicateurs de qualité Q du lien entre un RCRA et son Père peuvent être utilisés tels que par exemple :

- Des indicateurs de qualité associés au niveau du signal de transmission (par exemple un signal radio ou un signal acoustique) : la puissance du signal reçu du Père, le RSSI (Received Signal Strength Indication) ;

- Des indicateurs de qualité de la connectivité liés à la performance du lien, tel que par exemple :

  - Le MCS (« Modulation and Coding Index ») permettant d'estimer le débit théorique du lien ;

  - L'évaluation du débit applicatif disponible en prenant en compte le MCS et les indicateurs de données transmises (TX) et reçues (RX) sur le lien entre le RCRA et son Père ;

  - La mesure de la latence (par exemple la mesure du « Round Trip Time » (RTT)) entre le RCRA et son Père ;

  - Etc.

- Ou toute combinaison de ces indicateurs.

Chaque RCRA du réseau sans-fil linéaire appliquant ce même procédé (600), le réseau sans-fil linéaire constitué de l'ensemble de ces RCRAs permet alors de maintenir une connectivité de qualité entre une BA et un VM, tant que le dernier RCRA rajouté au réseau sans-fil maillé (i.e. le plus proche de la BA) n'est pas trop éloigné de la BA.

Si le dernier RCRA ajouté au réseau devient par son déplacement trop éloigné de la BA, le procédé de l'invention permet alors de déclencher une procédure (700) pour ajouter un nouveau RCRA au réseau sans-fil linéaire.

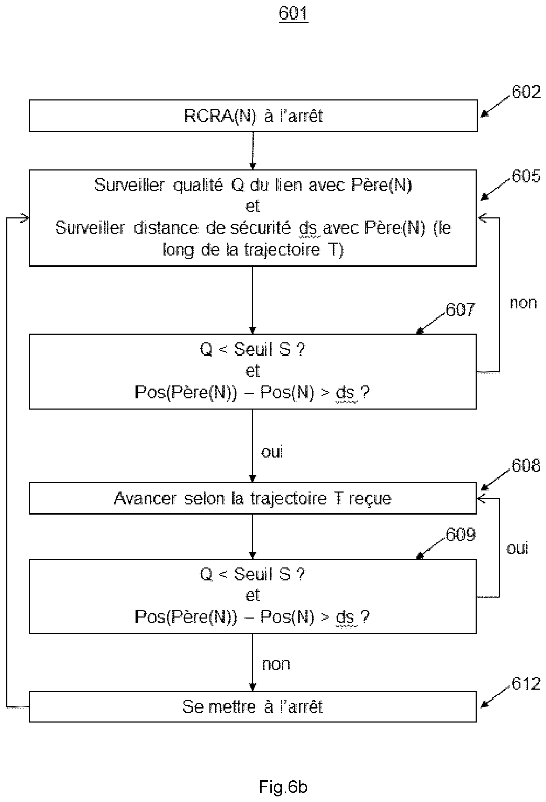

La figure 6b est un organigramme d'une variante du procédé de la figure 6a où les étapes identiques portent les mêmes références et ne sont pas décrites en détail.

La variante dans le procédé (601) de la figure 6b consiste en une extension optionnelle qui permet en plus d'assurer la qualité du lien d'un RCRA avec son Père, d'assurer que le RCRA respecte à tout moment une distance de sécurité minimale (ds) entre lui et son Père.

L'étape (605) de surveillance consiste en ce que le RCRA surveille la qualité Q du lien mais également la distance entre lui et son Père.

Un RCRA ne se met en mouvement (608) que si la qualité du lien tombe sous le seuil S prédéfini et que la distance entre lui et son Père est supérieure à la distance de sécurité 'ds' prédéfinie (branche Oui de l'étape 607), sinon le RCRA reste dans l'état de double surveillance qualité et distance (605).

Dans ce mode de réalisation, chacun des RCRA diffuse vers son Fils sa propre position (Pos), par exemple à intervalle régulier, en plus de transmettre la trajectoire T du VM à son Fils.

Ainsi chaque RCRA du réseau sans-fil linéaire peut calculer la distance entre lui et son Père en connaissant la position de son Père (reçue de ce dernier) et sa propre position, déterminée grâce au système de localisation (412) intégré au RCRA.

Pendant son déplacement le long de la trajectoire T, le procédé permet au RCRA de continuer à évaluer (609) la qualité de la connectivité directe entre ce RCRA et son Père ainsi que la distance de sécurité minimale (ds) entre lui et son Père. Quand la qualité Q repasse au-dessus du seuil S prédéfini, ou que la distance de sécurité minimale 'ds' n'est plus respectée, le RCRA se remet à l'arrêt (612).

La figure 7 est un organigramme des étapes (700) opérées par une BA pour intégrer un nouveau RCRA (stocké en zone de réserve) dans un réseau de communication sans- fil linéaire maillé établi entre une BA et un VM.

Le procédé (700) est décrit en prenant l'hypothèse que le réseau sans-fil linéaire intègre déjà une pluralité 'N' de RCRAs, désignés par RCRCA(1), RCRA(2), RCRA(N), et positionnés dans cet ordre 1 à N depuis un VM vers une BA le long de la trajectoire T du VM.

Les opérations (700) effectuées par une BA (i.e. le procédé opéré par une BA) pour décider si un nouveau RCRA(N+1) doit être intégré, et l'intégrer le cas échéant au réseau de communication sans-fil linéaire maillé entre le VM et la BA, consistent à :

Etapes (702, 704) : la BA surveille (702) la qualité du lien avec son Père (RCRA(N) dans l'exemple) et si celle-ci passe sous un certain seuil S prédéfini (branche Oui de 704), permettant d'anticiper une perte ou une dégradation de la qualité de la connectivité avec le RCRA(N), la BA effectue alors les étapes suivantes :

Etape (706) : mettre en position le nouveau RCRA(N+1) (initialement localisé en zone de réserve) en activant son déplacement vers la position initiale de la trajectoire T du VM (la position initiale de la trajectoire T du VM étant le point de départ du VM au démarrage de la mission). Cette position initiale est connue de la BA qui la reçoit via son module (310) de réception de trajectoire de VM.

Etape (708) : lorsque le RCRA(N+1) est arrivé de manière autonome depuis la zone de réserve à la position initiale de la trajectoire du VM, la BA procède à une première étape de configuration du RCRA(N+1) en vue de l'intégrer dans le réseau sans-fil linéaire entre la BA et le RCRA(N).

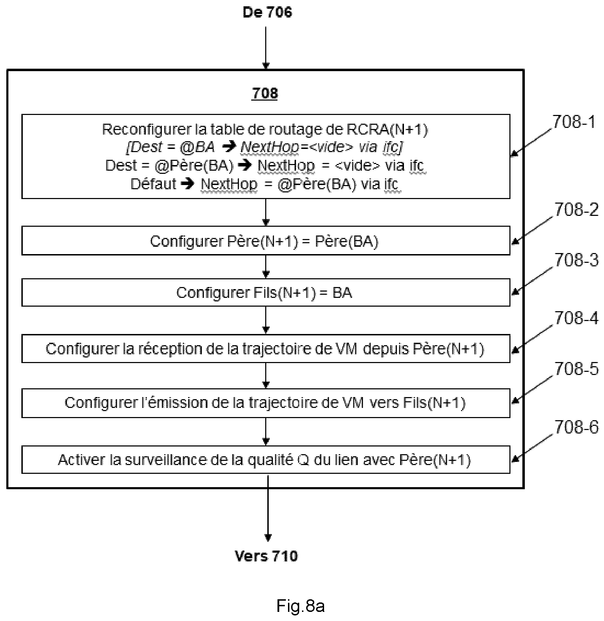

La figure 8a détaille un mode de réalisation de la première étape de configuration (708) du RCRA(N+1), et qui consiste à :

- Etape (708-1) : reconfigurer la table de routage (406) du RCRA(N+1) en indiquant que :

    - Le RCRA(N) (actuellement le Père de la BA) est directement joignable via son interface ifc ; et

    - Le RCRA(N) est le « nexthop par défaut » pour joindre tous les autres RCRAs du réseau et le VM.

- Etape (708-2) : Configurer le module (408) en indiquant que le Père du RCRA(N+1) est le RCRA(N).

- Etape (708-3) : Configurer le module (410) en indiquant que le Fils du RCRA(N+1) est la BA.

- Etape (708-4) : Activer au niveau de RCRA(N+1) le module (414) de réception de la trajectoire du VM depuis le RCRA(N).

- Etape (708-5) : Activer au niveau de RCRA(N+1) le module (416) d'émission de la trajectoire du VM vers la BA.

- Etape (708-6) : Activer au niveau de RCRA(N+1) le module (418) de surveillance de la qualité du lien direct avec son Père RCRA(N).

Ainsi, à cette étape le RCRA(N+1) est prêt à intégrer le réseau sans-fil linéaire mais il n'y est pas encore véritablement intégré puisque les reconfigurations du RCRA(N) (le père actuel de la BA) et de la BA n'ont pas encore été mises en place.

Revenant à la figure 7, le procédé poursuit après l'étape (708), par une étape (710) permettant à la BA de reconfigurer le RCRA(N) (son père actuel) pour lui indiquer qu'un nouveau RCRA(N+1) (le futur Père de BA) est maintenant à prendre en compte entre la BA et le RCRA(N).

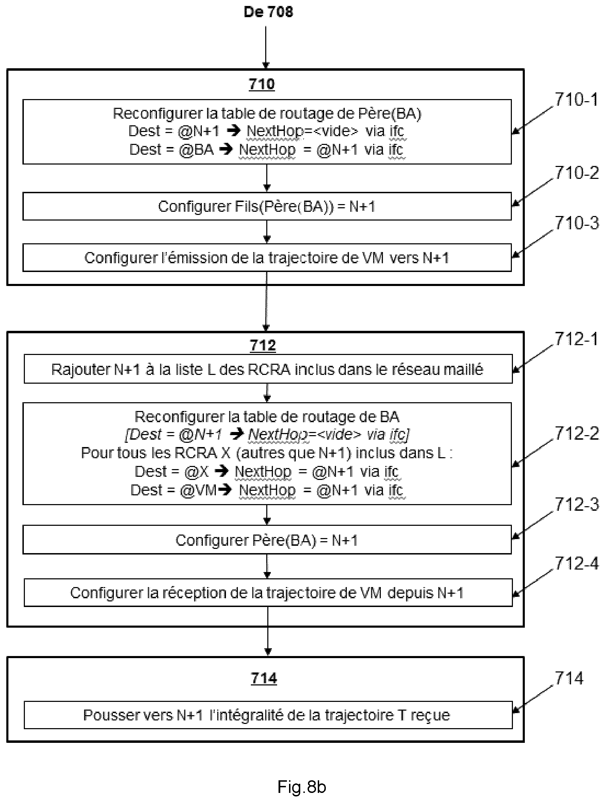

La figure 8b détaille un mode de réalisation de l'étape (710) qui consiste à :

- Etape (710-1) : Reconfigurer la table de routage (406) du RCRA(N) en indiquant que :

  - Le RCRA(N+1) est directement joignable via son interface ifc ;

  - La BA est maintenant joignable via le RCRA(N+1) (NextHop)

- Etape (710-2) : Configurer le module (410) en indiquant que le Fils du RCRA(N) est le RCRA(N+1).

- Etape (710-3) : Reconfigurer le module (416) d'émission de la trajectoire de VM (initialement transmise vers BA) pour la transmettre maintenant vers son nouveau Fils, i.e. le RCRA(N+1).

Revenant à la figure 7, le procédé poursuit après l'étape (710), par une étape (712) permettant à la BA de se reconfigurer.

La figure 8b détaille un mode de réalisation de l'étape (712) qui consiste à :

- Etape (712-1) : ajouter le RCRA(N+1) à une liste 'L' des RCRAs intégrés au réseau sans-fil linéaire maillé.

- Etape (712-2) : reconfigurer la table de routage (306) de la BA en indiquant que :

  - pour tous les RCRAs autres que le RCRA(N+1) inclus dans la liste 'L' (i.e. inclus dans le réseau sans-fil linéaire), ceux-ci sont joignables via le RCRA(N+1) (NextHop) ;

  - le VM est maintenant joignable via le RCRA(N+1) (NextHop).

- Etape (712-3) : Configurer le module (308) en indiquant que le Père de BA est maintenant le RCRA(N+1).

- Etape (712-4) : Configurer le module (310) de réception de la trajectoire de VM (initialement transmise depuis le RCRA(N)) pour recevoir la trajectoire maintenant depuis son nouveau Père, le RCRA(N+1).

Revenant à la figure 7, le procédé poursuit après l'étape (712), par une étape (714) permettant à la BA de procéder à une deuxième étape de configuration du RCRA(N+1) qui est maintenant rajouté au réseau sans-fil linéaire. Comme illustré sur la figure 8b, cette deuxième étape de configuration du nouveau RCRA(N+1) consiste à pousser vers (i.e. à faire parvenir à ; transmettre à) ce RCRA(N+1) l'intégralité de la trajectoire de VM qui a déjà été reçue par la BA. Grâce à cette information et aux prochaines mises à jour de la localisation de VM qui seront reçues directement par le RCRA(N+1) (grâce à sa réception activée de la trajectoire de VM depuis son Père RCRA(N)), le RCRA(N+1) aura connaissance de l'intégralité de la trajectoire de VM depuis le début de la mission jusqu'à l'instant 't'.

Une fois que le procédé (700) opéré par une BA est terminé, le réseau sans-fil linéaire entre la BA et le VM a été mis à jour avec l'ajout d'un RCRA(N+1) qui est venu se positionner entre la BA et le RCRA(N). Le RCRA(N+1) est maintenant le Père de la BA (716).

La figure 9 est un organigramme des étapes opérées par un RCRA intégré à un réseau, en mode de repli.

Dans un mode de réalisation avantageux, la présente invention comprend également un mode de repli permettant, lorsqu'un VM rebrousse chemin selon sa trajectoire initiale, un repli automatique des RCRAs positionnés le long de cette même trajectoire et un démantèlement du réseau maillé formé par les RCRAs. Le démantèlement est progressif via le retrait des RCRAs du réseau maillé au fur et à mesure qu'ils ne sont plus nécessaires pour préserver la connectivité de qualité entre le VM et la BA.

Ce mode est particulièrement intéressant puisqu'il permet de limiter le nombre de RCRAs à déployer (typiquement diviser par deux ce nombre) afin de permettre au VM de rejoindre son point initial en fin de mission. De plus, il est particulièrement intéressant lorsque le VM circule dans un environnement extrêmement exigu (comme un couloir) ne permettant pas physiquement à un VM et un RCRA de se croiser.

Le mode de repli est déclenché à l'initiative d'une BA lorsqu'un VM doit rebrousser chemin selon sa trajectoire initiale. La BA transmet alors à chacun des RCRAs du réseau sans-fil linéaire un « ordre de repli », qui va alors initier au niveau de chacun des RCRA recevant ce message le procédé (900) décrit en référence à la figure 9.

Le procédé (900) débute à réception (902) par un RCRA(N) intégré au réseau sans-fil linéaire, d'un message signifiant un ordre de repli selon la trajectoire T d'un VM, le RCRA(N) étant alors à l'arrêt ou se mettant alors à l'arrêt s'il était en mouvement.

Dans une étape suivante (904), le procédé permet au RCRA(N) de désactiver son module (418) de surveillance de la qualité du lien avec son Père, puis poursuit par une étape (906) permettant au RCRA(N) d'activer le module (412) de transmission de sa localisation vers son Fils.

Dans une étape suivante (908), le procédé permet d'activer la réception de la localisation du Père de RCRA(N), et sur la base de cette information et de sa propre localisation de RCRA(N), de faire (910) un calcul régulier de la distance entre lui-même RCRA(N) et son Père.

Dès lors que cette distance passe sous le seuil d'une distance de repli (dr) prédéfinie, le procédé permet (912) au RCRA(N) de se mettre en marche (se déplacer) en sens inverse, selon la trajectoire T préalablement reçue de VM, et d'entamer son repli vers le point d'origine de la trajectoire T. Lorsque le RCRA(N) se déplace il poursuit sa surveillance de la distance entre lui-même RCRA(N) et son Père et arrête son déplacement dès lors que cette distance repasse au-dessus de la distance de repli (dr) ; le procédé reboucle alors vers l'étape 910.

Le procédé permet au RCRA(N) de déterminer (914) quand il a rejoint la position d'origine de la trajectoire T de VM, et de se mettre à l'arrêt (916).

Le retrait du réseau sans-fil linéaire d'un RCRA est mis en place par la BA conformément au procédé (1000) décrit en référence aux figures 10a et 10b.

Les [FIG. 10a] et [FIG. 10b] sont des organigrammes détaillant des étapes opérées par une BA pour démanteler un réseau de RCRAs en mode repli, selon les étapes consistant à :

Etape 1002 : la BA vérifie que le réseau sans-fil linéaire contient bien au moins un RCRA (i.e. elle vérifie que la liste L n'est pas vide). Si ce n'est pas le cas, aucun démantèlement n'est requis et le procédé se termine immédiatement.

Etape 1004 : Si la liste L n'est effectivement pas vide, la BA transmet un ordre de repli à chacun des RCRA du réseau sans-fil linéaire pour initier leurs replis, ces derniers initiant le procédé de la figure 9.

Etape 1006 : La BA active alors la réception de la localisation de son Père (RCRA_courant, en mode de repli selon la trajectoire T du VM).

Etapes 1008, 1010 : la BA surveille (1008) l'information de localisation jusqu'à détecter (1010) que son Père est arrivé au point d'origine de la trajectoire T de VM.

Etape 1012 : la BA déclenche alors la reconfiguration du Père de son Père (i.e. Père(RCRA_courant)) parles étapes :

- 1012-1 : de reconfiguration de la table de routage de Père(RCRA_courant) pour indiquer que la BA est maintenant joignable en portée directe via son interface ifc ;

- 1012-2 : de reconfiguration du champ Fils de Père(RCRA_courant) pour indiquer que son Fils est maintenant la BA ; et

- 1012-3 : de reconfiguration de l'émission de la trajectoire de VM vers son nouveau Fils (i.e. la BA, en remplacement du RCRA_courant).

Le procédé poursuit par une étape (1014) permettant à la BA de se reconfigurer, par les étapes :

- 1014-1 : de retirer le RCRA_courant de la liste L des RCRAs inclus dans le réseau sans-fil linéaire ;

- 1014-2 : de reconfigurer sa table de routage (celle de BA) pour indiquer que :

  - maintenant tous les RCRAs restant dans le réseau sans-fil linéaire (i.e. présents dans la liste L) et autres que le Père(RCRA_courant) sont joignables via le Père(RCRA_courant) ;

  - le VM est maintenant joignable via le Père(RCRA_courant) (NextHop) ;

  - le Père(RCRA_courant) est joignable en portée sans-fil directe via l'interface ifc de BA, de la manière suivante :

    « @VM → NextHop = Père(RCRA_courant) via ifc » et
    « @Père(RCRA_courant) → NextHop = <vide> via ifc ».

- 1014-3 : de reconfigurer son champ Père pour indiquer que son Père est maintenant Père(RCRA_courant) ; et

- 1014-4 : de reconfigurer la réception de la trajectoire du VM depuis son nouveau Père (=Père(RCRA_courant)).

Le procédé poursuit par une étape (1016) permettant à la BA une reconfiguration du RCRA_courant, pour le faire passer en zone de réserve, par les étapes :

- Etape 1016-1 : de réinitialisation de la table de routage du RCRA_courant, en supprimant toutes les entrées sauf celle indiquant que la BA est joignable en direct via son interface ifc ;

- Etape 1016-2 : de désactivation de la réception de la trajectoire de VM depuis le Père(RCRA_courant) ;

- Etape 1016-3 : de désactivation de l'émission de la trajectoire de VM vers le Fils(RCRA_courant) ;

- Etapes 1016-4, 1016-5 : de réinitialisation à « vide » des champs Père et Fils du RCRA_courant ; et

- Etape 1016-6 : d'activation du déplacement du RCRA_courant vers un point spécifique de la zone de réserve.

Le procédé poursuit par une étape (1018) permettant à la BA de vérifier si la liste L des RCRA inclus dans le réseau est vide ou non, et de reboucler sur les étapes de démantèlement (vers 1006) tant qu'il reste un RCRA dans le réseau sans-fil linéaire (i.e. tant que le Père de la BA n'est pas le VM), ou de se terminer quand la liste est vide.

Avantageusement, à tout moment une BA peut interrompre le mode de repli et rebasculer dans le mode normal en transmettant un « ordre de fin de repli » à l'ensemble des RCRAs encore présents dans le réseau sans-fil linéaire (i.e. encore présents dans la liste L). A réception de cet « ordre de fin de repli », chacun des RCRAs se reconfigure pour passer du mode de repli vers le mode normal, et la BA se reconfigure également de même.

Dans une variante de l'invention, le mode de repli peut être initié par une BA même si un VM n'a pas à rebrousser chemin vers sa position initiale. Ceci peut par exemple se produire dans un scénario où un VM a atteint une position finale et que le lien de communication entre la BA et le VM n'est plus nécessaire. Dans ce cas, la BA peut décider de procéder au repli des différents RCRAs du réseau sans-fil linéaire selon les procédés des figures 9 et 10a-10b, en considérant que le RCRA de tête (celui qui était en porté directe du VM) joue alors le rôle de VM.

Dans une variante de réalisation, la BA, le VM et les RCRAs intégrés dans le réseau sans-fil linéaire, peuvent mettre en œuvre une fonctionnalité additionnelle de manière à renforcer la robustesse du réseau face à une défaillance d'un ou de plusieurs RCRAs, et ainsi de permettre une reconfiguration automatique du réseau sans-fil linéaire afin de préserver une connectivité de qualité entre le VM et la BA.

Une défaillance d'un RCRA rendant le réseau inopérant peut être due à différentes causes telles que par exemple une panne ou une destruction du RCRA (p.ex. dans un scénario d'application militaire / défense).

Ce sous-procédé supplémentaire de reconfiguration automatique du réseau sans-fil linéaire, en cas de défaillance d'un ou de plusieurs RCRAs, est mis en œuvre par chacun des équipements (BA, VM et RCRAs) faisant partie du réseau sans-fil linéaire. Les RCRAs ont été intégrés au réseau sans-fil linéaire selon un ordre correspondant à leur numéro d'identification, tel que le RCRA(1) soit le Fils du VM, le RCRA(2) soit le Fils du RCRA(1), etc, et l'adresse **IP** de chaque RCRA peut être directement calculée/dérivée à partir de son identifiant.

Avec ces prérequis, le sous-procédé de reconfiguration du réseau en cas de défaillance, peut être mis en place de manière complètement autonome localement par chaque équipement du réseau sans-fil linéaire (la BA, le VM et les RCRAs) car chacun est apte à déterminer les identifiants de ses voisins de second niveau, et sur cette base de s'auto-reconfigurer selon le sous-procédé qui consiste en ce que :

- Chacun des équipements surveille la présence de son Père (i.e. si le champ n'est pas vide) et de son Fils (i.e. si le champ n'est pas vide) au sein du réseau sans-fil linéaire, de manière à détecter une éventuelle défaillance de ceux-ci. Pour ce faire l'équipement (par exemple un RCRA(N)) peut transmettre à intervalles de temps réguliers un message de test de présence (par exemple un message de type « ICMP Echo Request ») vers son Père et vers son Fils, et attendre en retour un message de réponse à ce test de chacun d'eux (par exemple un message de réponse de type « ICMP Echo Reply »). Si l'équipement ne reçoit aucune réponse de l'un de ses voisins directs (Père ou Fils) sur une période de temps prédéterminée, et typiquement supérieure à l'intervalle d'envoi des messages de tests, l'équipement peut en déduire que le voisin en question est défaillant.

- Dès lors qu'un équipement (par exemple un RCRA(N)) détecte que l'un de ses voisins directs (par exemple son Père, un RCRA(N-1)) est défaillant, il initie une procédure d'auto-reconfiguration de manière à considérer maintenant que son voisin de deuxième niveau dans la direction de l'équipement défaillant (dans notre exemple ce voisin de deuxième niveau est donc le Père du Père de RCRA(N), soit le RCRA(N-2)) vient remplacer le nœud défaillant. Le RCRA(N) considère alors que son nouveau Père doit être maintenant le RCRA(N-2) et non plus le RCRA(N-1). Dans l'exemple, le RCRA(N) s'auto-reconfigure par les étapes suivantes :

  - Mise à jour de son champ Père pour indiquer que son Père est le RCRA(N-2) ;

  - Reconfiguration de sa table de routage en remplaçant l'adresse IP du RCRA(N-1) par celle du RCRA(N-2) dans toutes les entrées où cette première apparait ;

  - Reconfiguration de la réception de la trajectoire du VM de manière à ce qu'elle se fasse depuis le RCRA(N-2) et non plus par le RCRA(N-1) ; et

  - Reconfiguration de la surveillance de la qualité du lien direct pour quelle se fasse maintenant avec son Père RCRA(N-2) et non plus avec le RCRA(N-1).

Il est important de noter que le RCRA(N-2) qui appliquera lui aussi ce même sous-procédé, et donc détectera également la défaillance du RCRA(N-1), i.e. son Fils, s'auto-reconfigurera alors également de manière à considérer que RCRA(N) devient son nouveau Fils en remplacement de RCRA(N-1) qui est défaillant. Ainsi le réseau sans-fil linéaire s'est auto-reconfiguré de manière automatique, avec l'exclusion du RCRA(N-1) défaillant, de manière à maintenir une connectivité de qualité entre BA et VM.

Dans le cas particulier où l'équipement défaillant est le dernier RCRA rajouté au réseau sans-fil linéaire (par exemple un RCRAX), qui est donc le Père de la BA, alors le RCRA(X-1), i.e. le Père du nœud défaillant, peut détecter la défaillance du RCRAX, mais il n'a pas connaissance du fait que la BA est en fait le Fils du nœud défaillant. Il se reconfigurera de manière autonome selon l'hypothèse que son nouveau Fils doit être le RCRA(X+1) alors que ce RCRA n'est pas encore intégré au réseau sans-fil linéaire. Aussi, dans le cadre de ce sous-procédé, la BA adopte un comportement supplémentaire consistant, lorsqu'elle détecte elle aussi la défaillance de son Fils (RCRAX) à rajouter (depuis la zone de réserve) le nouveau RCRA(X+1) au réseau sans-fil linéaire, selon le procédé décrit en référence à la figure 7. Ainsi la connectivité globale est préservée entre la BA et le VM via cet ajout du RCRA(X+1) et la reconfiguration du RCRA(X-1).

Dans le cas particulier où l'équipement défaillant est le premier RCRA (i.e. le RCRA(1)) ajouté au réseau sans-fil linéaire, son Fils le RCRA(2) lorsqu'il détectera cette défaillance, comprendra que son nouveau Père doit maintenant être le VM, puisque le RCRA0 n'existe pas.

Un mode de réalisation avantageux de l'invention, repose sur une architecture orientée (SDN) pour « Software Defined Networking ». Cette architecture s'appuie sur un contrôleur SDN mis en place au niveau de la BA et apte à piloter, via son « Interface Sud », les configurations d'un ensemble d'équipements SDN, qui sont alors dans le cadre de l'invention (voir figure 2a), la BA (204), le VM (202) et l'ensemble des RCRAs (206).

Dans cette implémentation SDN, les procédés décrits précédemment en référence aux figures 7 et 10a-10b, mis en œuvre par la BA peuvent ainsi être implémentés sous la forme d'un Service SDN (au niveau de la BA) s'interfaçant avec le Contrôleur SDN via son Interface Nord, de manière à piloter les configurations des différents équipements SDN joignables via l'interface Sud du contrôleur SDN.

Ce service SDN est ainsi en charge de détecter qu'une reconfiguration du réseau sans-fil linéaire est nécessaire et de piloter alors cette reconfiguration, via la mise en place de reconfigurations sur la BA, le VM et les différents RCRAs concernés, pour :

- des opérations de la BA pour intégrer un nouvel RCRA au réseau de communication sans-fil linéaire maillé entre le VM et la BA, lorsque nécessaire ;

- des opérations de la BA pour démanteler progressivement le réseau de RCRAs entre la BA et le VM en mode de repli.

Dans cette implémentation SDN, les procédés décrits précédemment en référence aux figures 6a, 6b et 9, mis en œuvre par un RCRA intégré au réseau sans-fil linéaire, soit selon le mode normal (figures 6a ou 6b) ou selon le mode de repli (figure 9), peuvent être implémentés de deux manière différentes :

- soit via un module logiciel au niveau de chaque RCRA ;

- soit sous la forme d'un Service SDN au niveau de la BA, ce service SDN s'interfaçant avec le contrôleur SDN via son interface Nord de manière à pouvoir piloter le comportement des RCRAs intégrés au réseau sans-fil linéaire (ces RCRAs étant des équipements SDN joignables via l'interface Sud du contrôleur SDN). Ce pilotage du comportement des RCRAs permet alors de réaliser les opérations des procédés précités.

## Revendications

1. Procédé (700) de déploiement automatique d'un réseau de communication bidirectionnelle, sans-fil linéaire maillé, entre un véhicule de mission VM et une base arrière BA, le véhicule de mission se déplaçant depuis une position initiale le long d'une trajectoire T, le déploiement consistant à créer une file d'équipements relais de communication le long de la trajectoire T du VM, tel que les communications entre le véhicule de mission et la base arrière conservent une qualité de lien de communication Q égale ou supérieure à une valeur seuil S pendant le déplacement du VM, chaque équipement relais de communication de la file étant un équipement mobile autonome dit Relais de Communication Robotisé Autonome et noté RCRA(N), apte à se déplacer de manière autonome, le procédé comprenant des étapes consistant à :

(a) déterminer (702, 704) quand la qualité de lien de communication entre la base arrière et un relais de communication robotisé autonome RCRA(N) positionné en queue de file sur la trajectoire T, est inférieure à la valeur seuil S, la position en queue de file étant celle la plus proche de la BA et ledit RCRA(N) étant considéré dans une relation de connectivité père/fils comme étant le père de la base arrière BA ;
(b) envoyer (706) un nouveau relais de communication robotisé autonome noté RCRA(N+1) se positionner le long de la trajectoire T, entre la base arrière BA et le relais de communication robotisé autonome RCRA(N) positionné en queue de file, la position du nouveau relais de communication robotisé autonome RCRA(N+1) étant déterminée pour établir une qualité de lien de communication entre ledit nouveau relais de communication robotisé autonome RCRA(N+1) et la BA à une valeur égale ou supérieure à la valeur seuil S ;
(c) configurer (708, 710, 712, 714) : les relais de communication robotisés autonomes notés RCRAs déjà positionnés sur la trajectoire T ; la base arrière BA ; et le véhicule de mission VM ; afin de définir que le nouveau relais de communication robotisé autonome RCRA(N+1) devient le père de la BA, et définir que le réseau sans-fil linéaire maillé entre le VM et la base arrière BA est mis à jour avec l'ajout du nouveau relais de communication robotisé autonome RCRA(N+1).

2. Le procédé selon la revendication 1 dans lequel l'étape d'envoyer un nouveau relais de communication robotisé autonome RCRA(N+1) comprend une première étape consistant à activer le déplacement du nouveau relais de communication robotisé autonome RCRA(N+1) depuis une zone de réserve vers la position initiale de la trajectoire T, la zone de réserve regroupant une pluralité de relais de communication robotisé autonome.

3. Le procédé selon la revendication 1 ou 2 dans lequel l'étape (708) de configuration des relais de communication robotisés autonomes RCRAs du réseau positionnés sur la trajectoire T, comprend des étapes de configuration du nouveau relais de communication robotisé autonome RCRA(N+1) consistant à :

   - reconfigurer (708-1) une table de routage (406) du RCRA(N+1) pour indiquer que le RCRA(N) est directement joignable et qu'il est le prochain relais pour joindre tous les autres RCRAs du réseau et le VM ;
   - identifier (708-2) que le père du RCRA(N+1) est le RCRA(N), et (708-3) que le fils du RCRA(N+1) est la BA ;
   - activer (708-4) un module (414) de réception de la trajectoire T du VM depuis le RCRA(N) ;
   - activer (708-5) un module (416) d'émission de la trajectoire du VM vers la BA ; et
   - activer (708-6) un module (418) de surveillance de la qualité du lien direct avec son Père le RCRA(N).

4. Le procédé selon l'une quelconque des revendications 1 à 3 dans lequel l'étape (710) de configuration des relais de communication robotisés autonomes du réseau positionnés sur la trajectoire T, comprend des étapes de configuration du dernier relais de communication robotisé autonome RCRA(N) positionné sur la trajectoire T, consistant à :

   - reconfigurer (710-1) une table de routage (406) du RCRA(N) pour indiquer que le RCRA(N+1) est directement joignable et que la BA est joignable via le nouveau relais de communication robotisé autonome RCRA(N+1) ;
   - identifier (710-2) que le fils du RCRA(N) est le RCRA(N+1) ; et
   - reconfigurer (710-3) un module (416) d'émission de la trajectoire de VM pour activer la transmission de la trajectoire vers le nouveau fils RCRA(N+1) du RCRA(N).

5. Le procédé selon l'une quelconque des revendications 1 à 4 dans lequel l'étape (712) de configuration de la base arrière BA, comprend des étapes consistant à :

   - ajouter (712-1) le nouveau relais de communication robotisé autonome RCRA(N+1) à une liste 'L' des RCRAs intégrés au réseau sans-fil linéaire maillé ;
   - reconfigurer (712-2) une table de routage (306) de la BA pour indiquer que tous les RCRAs inclus dans la liste 'L', autres que le nouveau relais de communication robotisé autonome RCRA(N+1), sont joignables via le nouveau relais de communication robotisé autonome RCRA(N+1), et que le véhicule mobile VM est joignable via le nouveau relais de communication robotisé autonome RCRA(N+1) ;
   - identifier (712-3) que le père de la base arrière BA est le nouveau relais de communication robotisé autonome RCRA(N+1) ; et
   - configurer (712-4) un module (310) de réception de la trajectoire de VM pour activer la réception de la trajectoire depuis le nouveau père RCRA(N+1).

6. Le procédé selon la revendication 5 dans lequel l'étape de configuration du nouveau relais de communication robotisé autonome RCRA(N+1) comprend de plus une étape consistant à transmettre au nouveau relais de communication robotisé autonome, l'intégralité de la trajectoire T de VM.

7. Le procédé selon l'une quelconque des revendications 1 à 6 dans lequel l'étape de configuration des relais de communication robotisés autonomes RCRAs du réseau sans-fil linéaire maillé, comprend de plus des étapes permettant à chaque relais positionné le long de la trajectoire T du VM de :

   - surveiller (604) la qualité du lien de communication entre lui et son père ; et
   - avancer (608) de manière autonome sur la trajectoire T quand la qualité du lien est inférieure à la valeur seuil S.

8. Le procédé selon la revendication 7 dans lequel l'étape de surveillance comprend de plus une étape (605) consistant à surveiller la distance entre lui et son père, et l'étape d'avancement (608) consiste à avancer quand la qualité du lien est inférieure à la valeur seuil S et que la distance entre lui et son père est supérieure à une distance de sécurité ds.

9. Le procédé selon l'une quelconque des revendications 1 à 8 comprenant de plus une étape consistant à calculer une nouvelle valeur S du seuil de qualité avant l'étape de configuration.

10. Le procédé selon l'une quelconque des revendications 1 à 9 comprenant de plus des étapes (900) permettant un repli progressif et automatique des relais de communication robotisés autonomes positionnés sur la trajectoire T du véhicule de mission VM, lorsqu'un VM rebrousse chemin selon sa trajectoire initiale, le repli des relais de communication robotisés autonomes entrainant un démantèlement du réseau sans-fil linéaire maillé.

11. Un produit programme d'ordinateur, ledit programme d'ordinateur comprenant des instructions de code permettant d'effectuer les étapes du procédé selon l'une quelconque des revendications 1 à 10, lorsque ledit programme est exécuté sur un ordinateur.

12. Un dispositif pour le déploiement automatique d'un réseau de communication entre un véhicule de mission VM et une base arrière BA, le dispositif comprenant des moyens pour mettre en œuvre les étapes du procédé de selon l'une quelconque des revendications 1 à 10.

13. Le dispositif selon la revendication 12 où le véhicule de mission est un véhicule terrestre ou aérien ou amphibie ou aquatique, ledit véhicule étant piloté ou télé-piloté ou auto-piloté.

14. Un contrôleur, Software Defined Networking dit SDN, ayant une Interface Nord et une Interface Sud, ledit contrôleur SDN étant apte à piloter via son Interface Sud les configurations d'équipements SDN et à mettre en œuvre sous la forme d'un Service SDN via son Interface Nord les étapes du procédé selon l'une quelconque des revendications 1 à 10,et où lesdits équipements SDN étant constitués par la base arrière BA, le véhicule de mission VM et l'ensemble des relais de communication robotisés autonomes RCRAs.

## Patentansprüche

1. Verfahren (700) zur automatischen Bereitstellung eines bidirektionalen, drahtlosen, linearen Maschenkommunikationsnetzwerks zwischen einem Einsatzfahrzeug VM und einer Basisstation BA, wobei sich das Einsatzfahrzeug von einer Ausgangsposition entlang einer Trajektorie T bewegt, wobei die Bereitstellung darin besteht, eine Reihe von Kommunikationsrelaisgeräten entlang der Trajektorie T des VM zu schaffen, so dass die Kommunikation zwischen dem Einsatzfahrzeug und der Basisstation während der Bewegung des VM eine Kommunikationsverbindungsqualität Q beibehält, die gleich oder größer als ein Schwellenwert S ist, wobei jedes Kommunikationsrelaisgerät in der Reihe ein autonomes mobiles Gerät, ein sogenanntes autonomes robotergesteuertes Kommunikationsrelais, bezeichnet als RCRA(N), ist, das sich autonom fortbewegen kann, wobei das Verfahren die Schritte umfasst, bestehend aus:

(a) Bestimmen (702, 704), wann die Qualität der Kommunikationsverbindung zwischen der Basisstation und einem autonomen robotergesteuerten Kommunikationsrelais RCRA(N), das am Ende der Schlange auf der Trajektorie T positioniert ist, unter dem Schwellenwert S liegt, wobei die Position am Ende der Schlange diejenige ist, die der BA am nächsten liegt, und wobei das RCRA(N) in einer Vater-Sohn-Verbindungsbeziehung als Vater der Basisstation BA betrachtet wird;

(b) Senden (706) eines neuen autonomen robotergestützten Kommunikationsrelais mit der Bezeichnung RCRA(N+1), das sich entlang der Trajektorie T zwischen der Basisstation BA und dem autonomen robotergestützten Kommunikationsrelais RCRA(N) am Ende der Schlange positioniert, wobei die Position des neuen autonomen robotergestützten Kommunikationsrelais RCRA(N+1) bestimmt wird, um eine Kommunikationsverbindungsqualität zwischen dem neuen autonomen robotergestützten Kommunikationsrelais RCRA(N+1) und der BA auf einen Wert zu bringen, der gleich oder größer als der Schwellenwert S ist;

(c) Konfigurieren (708, 710, 712, 714): der bereits auf der Trajektorie T positionierten autonomen robotergesteuerten Kommunikationsrelais mit der Bezeichnung RCRA; der Basisstation BA; und des Einsatzfahrzeugs VM; um zu definieren, dass das neue autonome robotergesteuerte Kommunikationsrelais RCRA(N+1) zum Vater der BA wird, und um zu definieren, dass das lineare drahtlose Maschennetzwerk zwischen dem VM und der Basisstation BA durch Hinzufügen des neuen autonomen robotergesteuerten Kommunikationsrelais RCRA(N+1) aktualisiert wird.

2. Verfahren nach Anspruch 1, wobei der Schritt des Sendens eines neuen autonomen robotergestützten Kommunikationsrelais RCRA(N+1) einen ersten Schritt umfasst, der darin besteht, die Bewegung des neuen autonomen robotergestützten Kommunikationsrelais RCRA(N+1) von einer Reservezone zur Ausgangsposition der Trajektorie T zu aktivieren, wobei die Reservezone eine Vielzahl von autonomen robotergestützten Kommunikationsrelais umfasst.

3. Verfahren nach Anspruch 1 oder 2, wobei der Schritt (708) der Konfiguration der autonomen robotergestützten Kommunikationsrelais RCRAs des Netzwerks, die auf der Trajektorie T positioniert sind, Schritte zur Konfiguration des neuen autonomen robotergestützten Kommunikationsrelais RCRA(N+1) umfasst, bestehend aus:

  - Neukonfigurieren (708-1) einer Routing-Tabelle (406) des RCRA(N+1), um anzuzeigen, dass das RCRA(N) direkt erreichbar ist und dass es das nächste Relais ist, um alle anderen RCRAs des Netzwerks und das VM zu erreichen;
  - Identifizieren (708-2), dass der Vater von RCRA(N+1) RCRA(N) ist, und (708-3), dass der Sohn von RCRA(N+1) BA ist;
  - Aktivieren (708-4) eines Moduls (414) zum Empfangen der Trajektorie T des VM vom RCRA(N);
  - Aktivieren (708-5) eines Moduls (416) zum Senden der Trajektorie des VM an die BA; und
  - Aktivieren (708-6) eines Moduls (418) zur Überwachung der Qualität der direkten Verbindung zu seinem Vater, dem RCRA(N).

4. Verfahren nach einem der Ansprüche 1 bis 3, wobei der Schritt (710) zum Konfigurieren der autonomen robotergestützten Kommunikationsrelais des Netzwerks, die auf der Trajektorie T positioniert sind, Schritte zum Konfigurieren des letzten autonomen robotergestützten Kommunikationsrelais RCRA(N), das auf der Trajektorie T positioniert ist, umfasst, bestehend aus:

  - Neukonfigurieren (710-1) einer Routing-Tabelle (406) des RCRA(N), um anzuzeigen, dass das RCRA(N+1) direkt erreichbar ist und dass die BA über das neue autonome robotergesteuerte Kommunikationsrelais RCRA(N+1) erreichbar ist;
  - Identifizieren (710-2), dass der Sohn von RCRA(N) RCRA(N+1) ist; und
  - Neukonfigurieren (710-3) eines Moduls (416) zur Übertragung der Trajektorie von VM, um die Übermittlung der Trajektorie an den neuen Sohn RCRA(N+1) von RCRA(N) zu aktivieren.

5. Verfahren nach einem der Ansprüche 1 bis 4, wobei der Schritt (712) zum Konfigurieren der Basisstation BA die Schritte umfasst, bestehend aus:

  - Hinzufügen (712-1) des neuen autonomen robotergesteuerten Kommunikationsrelais RCRA(N+1) zu einer Liste "L" der in das lineare drahtlose Maschennetzwerk integrierten RCRA;
  - Neukonfigurieren (712-2) einer Routing-Tabelle (306) der BA, um anzuzeigen, dass alle in der Liste "L" enthaltenen RCRA außer dem neuen autonomen robotergestützten Kommunikationsrelais RCRA(N+1) in der Liste "L" über das neue autonome robotergestützte Kommunikationsrelais RCRA(N+1) erreichbar sind und dass das mobile Fahrzeug VM über das neue autonome robotergestützte Kommunikationsrelais RCRA(N+1) erreichbar ist;
  - Identifizieren (712-3), dass der Vater der Basisstation BA das neue autonome robotergesteuerte Kommunikationsrelais RCRA(N+1) ist; und
  - Konfigurieren (712-4) eines Moduls (310) zum Empfang der Trajektorie VM, um den Empfang der Trajektorie vom neuen Vater RCRA(N+1) zu aktivieren.

6. Verfahren nach Anspruch 5, wobei der Schritt des Konfigurierens des neuen autonomen robotergestützten Kommunikationsrelais RCRA(N+1) weiter einen Schritt umfasst, der darin besteht, die Gesamtheit der Trajektorie T von VM an das neue autonome robotergestützte Kommunikationsrelais zu übertragen.

7. Verfahren nach einem der Ansprüche 1 bis 6, wobei der Schritt der Konfiguration der autonomen robotergestützten Kommunikationsrelais (RCRAs) des linearen drahtlosen Maschennetzwerks weiter Schritte umfasst, die es jedem entlang der Trajektorie T des VM positionierten Relais ermöglichen:

  - Überwachen (604) der Qualität der Kommunikationsverbindung zwischen ihm und seinem Vater; und
  - autonomes Vorrücken (608) auf der Trajektorie T, wenn die Qualität der Verbindung unter dem Schwellenwert S liegt.

8. Verfahren nach Anspruch 7, wobei der Überwachungsschritt zusätzlich einen Schritt (605) umfasst, der darin besteht, den Abstand zwischen ihm und seinem Vater zu überwachen, und der Vorrückungsschritt (608) darin besteht, vorzurücken, wenn die Qualität der Verbindung unter dem Schwellenwert S liegt und der Abstand zwischen ihm und seinem Vater größer als ein Sicherheitsabstand ds ist.

9. Verfahren nach einem der Ansprüche 1 bis 8, weiter umfassend einen Schritt, der darin besteht, vor dem Konfigurationsschritt einen neuen Wert S für die Qualitätsschwelle zu berechnen.

**10.** Verfahren nach einem der Ansprüche 1 bis 9, weiter umfassend Schritte (900), die ein progressives und automatisches Zurückziehen der autonomen robotergesteuerten Kommunikationsrelais ermöglichen, die auf der Trajektorie T des Einsatzfahrzeugs VM positioniert sind, wenn ein VM auf seiner Anfangstrajektorie umkehrt, wobei der Rückzug der autonomen robotergesteuerten Kommunikationsrelais zu einer Demontage des linearen drahtlosen Maschennetzwerks führt.

**11.** Computerprogrammprodukt, wobei das Computerprogramm Codeanweisungen umfasst, die es ermöglichen, die Schritte des Verfahrens nach einem der Ansprüche 1 bis 10 auszuführen, wenn das Programm auf einem Computer ausgeführt wird.

**12.** Vorrichtung zur automatischen Bereitstellung eines Kommunikationsnetzes zwischen einem Einsatzfahrzeug VM und einer Basisstation BA, wobei die Vorrichtung Mittel zur Implementierung der Schritte des Verfahrens nach einem der Ansprüche 1 bis 10 umfasst.

**13.** Vorrichtung nach Anspruch 12, wobei das Einsatzfahrzeug ein Land-, Luft-, Amphibien- oder Wasserfahrzeug ist, wobei das Fahrzeug gesteuert, ferngesteuert oder auto-gesteuert wird.

**14.** Steuereinheit, Software Defined Networking, auch SDN genannt, die eine Nordschnittstelle und eine Südschnittstelle aufweist, wobei die SDN-Steuereinheit in der Lage ist, über ihre Südschnittstelle die Konfigurationen der SDN-Geräte zu steuern und über ihre Nordschnittstelle die Schritte des Verfahrens nach einem der Ansprüche 1 bis 10 in Form eines SDN-Dienstes zu implementieren, und wobei die SDN-Geräte aus der Basisstation BA, dem Einsatzfahrzeug VM und der Gesamtheit der autonomen robotergesteuerten Kommunikationsrelais RCRAs bestehen.

**Claims**

**1.** Method (700) for automatically deploying a two-way, linear wireless mesh communication network between a moving vehicle VM and a rear base BA, with the moving vehicle moving from an initial position along a trajectory T, the deployment involving creating a queue of communication relay appliances along the trajectory T of the VM, such that the communications between the moving vehicle and the rear base maintain a communication link quality Q that is equal to or greater than a threshold value S while the VM is moving, with each communication relay appliance N of the queue being an autonomous mobile appliance, called Autonomous Robotic Communication Relay and denoted RCRA(N), capable of moving autonomously, the method comprising steps involving:

(a) determining (702, 704) when the communication link quality between the rear base and an autonomous robotic communication relay RCRA(N) positioned at the end of the queue on the trajectory T is below the threshold value S, with the position at the end of the queue being that closest to the BA and said RCRA(N) being considered, in a Parent-Child connectivity relationship, to be the Parent of the rear base BA;
(b) sending (706) a new autonomous robotic communication relay denoted RCRA(N+1) to be positioned along the trajectory T, between the rear base BA and the autonomous robotic communication relay RCRA(N) positioned at the end of the queue, with the position of the new autonomous robotic communication relay RCRA(N+1) being determined to establish a communication link quality between said new autonomous robotic communication relay RCRA(N+1) and the BA at a value that is equal to or greater than the threshold value S;
(c) configuring (708, 710, 712, 714): the autonomous robotic communication relays denoted RCRAs already positioned on the trajectory T, the rear base BA, and the moving vehicle VM, in order to determine that the new autonomous robotic communication relay RCRA(N+1) becomes the Parent of the BA, and to determine that the linear wireless mesh network between the VM and the rear base BA is updated with the addition of the new autonomous robotic communication relay RCRA(N+1).

**2.** Method according to claim 1, wherein the step of sending a new autonomous robotic communication relay RCRA(N+1) comprises a first step involving activating the movement of the new autonomous robotic communication relay RCRA(N+1) from a reserve zone toward the initial position of the trajectory T, with the reserve zone consolidating a plurality of autonomous robotic communication relays a) sample text Level 2c / sample text Level 2c / sample text Level 2c / sample text Level 2c

**3.** Method according to claim 1 or 2, wherein the step (708) of configuring the autonomous robotic communication relays RCRAs of the network positioned on the trajectory T comprises steps of configuring the new autonomous robotic communication relay RCRA(N+1) involving:

- reconfiguring (708-1) a routing table (406) of the RCRA(N+1) to indicate that the RCRA(N) is directly joinable and that it is the next relay for joining all the other RCRAs of the network and the VM;
- identifying (708-2) that the Parent of the RCRA(N+1) is the RCRA(N), and identifying (708-3) that the Child of the RCRA(N+1) is the BA;
- activating (708-4) a module (414) for receiving the trajectory T of the VM from the RCRA(N);
- activating (708-5) a module (416) for transmitting the trajectory of the VM to the BA; and
- activating (708-6) a module (418) for monitoring the quality of the direct link with its Parent, the RCRA(N).

4. Method according to any one of claims 1 to 3, wherein the step (710) of configuring the autonomous robotic communication relays of the network positioned on the trajectory T comprises steps of configuring the last autonomous robotic communication relay RCRA(N) positioned on the trajectory T, involving:

- reconfiguring (710-1) a routing table (406) of the RCRA(N) to indicate that the RCRA(N+1) is directly joinable and that the BA is joinable via the new autonomous robotic communication relay RCRA(N+1);
- identifying (710-2) that the Child of the RCRA(N) is the RCRA(N+1); and
- reconfiguring (710-3) a module (416) for transmitting the trajectory of the VM to activate the transmission of the trajectory to the new Child RCRA(N+1) of the RCRA(N).

5. Method according to any one of claims 1 to 4, wherein the step (712) of configuring the rear base BA comprises steps involving:

- adding (712-1) the new autonomous robotic communication relay RCRA(N+1) to a list 'L' of the RCRAs integrated in the linear wireless mesh network;
- reconfiguring (712-2) a routing table (306) of the BA to indicate that all the RCRAs included in the list 'L', other than the new autonomous robotic communication relay RCRA(N+1), are joinable via the new autonomous robotic communication relay RCRA(N+1), and that the moving vehicle VM is joinable via the new autonomous robotic communication relay RCRA(N+1);
- identifying (712-3) that the Parent of the rear base BA is the new autonomous robotic communication relay RCRA(N+1); and
- configuring (712-4) a module (310) for receiving the trajectory of the VM to activate the reception of the trajectory from the new Parent RCRA(N+1).

6. Method according to claim 5, wherein the step of configuring the new autonomous robotic communication relay RCRA(N+1) further comprises a step involving transmitting the entire trajectory T of the VM to the new autonomous robotic communication relay.

7. Method according to any one of claims 1 to 6, wherein the step of configuring the autonomous robotic communication relays RCRAs of the linear wireless mesh network further comprises steps allowing each relay positioned along the trajectory T of the VM to:

- monitor (604) the quality of the communication link between itself and its Parent; and
- autonomously advance (608) on the trajectory T when the quality of the link is below the threshold value S.

8. Method according to claim 7, wherein the monitoring step further comprises a step (605) involving monitoring the distance between itself and its Parent, and the step (608) of advancing involves advancing when the quality of the link is below the threshold value S and the distance between itself and its Parent is greater than a safe distance ds.

9. Method according to any one of claims 1 to 8, further comprising a step involving computing a new value S of the quality threshold before the configuration step.

10. Method according to any one of claims 1 to 9, further comprising steps (900) allowing progressive and automatic fallback of the autonomous robotic communication relays positioned on the trajectory T of the moving vehicle VM, when a VM turns back along its initial trajectory, with the fallback of the autonomous robotic communication relays leading to dismantling of the linear wireless mesh network.

11. Computer program product, said computer program comprising code instructions for carrying out the steps of the method according to any one of claims 1 to 10, when said program is executed on a computer.

12. Device for automatically deploying a communication network between a moving vehicle VM and a rear base BA, the device comprising means for implementing the steps of the method according to any one of claims 1 to 10.

13. Device according to claim 12, wherein the moving vehicle is a land or air or amphibious or aquatic vehicle, said vehicle being driven or remotely driven or self-driven.

14. Software Defined Networking (SDN) controller having a Northbound Interface and a Southbound Interface, said SDN controller being able to control, via its Southbound Interface, the configurations of SDN appliances and to implement, in the form of an SDN service via its Northbound Interface, the steps of the method according to any one of claims 1 to 10, and wherein said SDN appliances are made up of the rear base BA, the moving vehicle VM and the set of autonomous robotic communication relays RCRAs.

Fig. 1

Fig. 2a

Zone de réserve

RCRA(6) RCRA(5)

208

204

BA

RCRA(4)   RCRA(3)

RCRA(2)

206

206-4

Trajectoire de VM

RCRA(1)

VM

202

Fig.2b

BA

300

| Interface de communication (ifc) | 302 |
| Adresse IP (@BA) | 304 |
| Table de routage | 306 |
| Père = | 308 |
| Réception trajectoire de VM | 310 |
| Surveillance qualité lien « Père » | 312 |
| Contrôle Configuration BA, RCRA et VM | 314 |

Fig. 3

RCRA ⟋400

| |
|---|
| Interface de comm. (ifc) |

402

| |
|---|
| Adresse IP (@RCRA) |

404

| |
|---|
| Table de routage |

406

| |
|---|
| Père = |

408

| |
|---|
| Fils = |

410

| |
|---|
| Système de localisation |

412

| |
|---|
| Réception trajectoire VM |

414

| |
|---|
| Emission trajectoire VM |

416

| |
|---|
| Surveillance qualité lien « Père » |

418

| |
|---|
| Réception Configuration RCRA |

420

Fig. 4

VM ⟋500

| |
|---|
| Interface de comm. (ifc) ⟋502 |
| Adresse IP (@VM) ⟋504 |
| Table de routage ⟋506 |
| Fils = ⟋508 |
| Système de localisation ⟋510 |
| Calcul / Emission trajectoire VM ⟋512 |
| Réception Configuration VM ⟋514 |

Fig. 5

600

```
                                        ╱602
┌─────────────────────────────┐ ◄
│      RCRA(N)  à l'arrêt      │
└─────────────────────────────┘
              │
              ▼                         ╱604
┌─────────────────────────────┐ ◄──┐
│  Surveiller  qualité Q du lien │   │
│         avec Père(N)          │   │
└─────────────────────────────┘   │
              │          ╱606       │  non
              ▼                     │
┌─────────────────────────────┐    │
│        Q < Seuil S ?        │────┘
└─────────────────────────────┘
              │ oui
              ▼                         ╱608
┌─────────────────────────────┐ ◄──┐
│  Avancer  selon la trajectoire T │ │
│            reçue             │   │
└─────────────────────────────┘   │  oui
              │          ╱610       │
              ▼                     │
┌─────────────────────────────┐    │
│        Q < Seuil S ?        │────┘
└─────────────────────────────┘
              │ non
              ▼                         ╱612
┌─────────────────────────────┐ ◄
│      Se mettre  à l'arrêt    │
└─────────────────────────────┘
```

Fig. 6a

<u>601</u>

```
                                                                    ┌── 602
┌─────────────────────────────────────────────────┐
│                RCRA(N) à l'arrêt                 │
└─────────────────────────────────────────────────┘
                         │
                         ▼                          ┌── 605
┌─────────────────────────────────────────────────┐
│   Surveiller qualité Q du lien avec Père(N)      │
│                      et                          │
│  Surveiller distance de sécurité ds avec Père(N) (le │
│            long de la trajectoire T)             │
└─────────────────────────────────────────────────┘
                         │
                         ▼               607        non
┌─────────────────────────────────────────────────┐
│                  Q < Seuil S ?                   │
│                      et                          │
│        Pos(Père(N)) − Pos(N) > ds ?              │
└─────────────────────────────────────────────────┘
                         │
                        oui
                         │               608
┌─────────────────────────────────────────────────┐
│           Avancer selon la trajectoire T reçue   │
└─────────────────────────────────────────────────┘
                         │               609        oui
                         ▼
┌─────────────────────────────────────────────────┐
│                  Q < Seuil S ?                   │
│                      et                          │
│        Pos(Père(N)) − Pos(N) > ds ?              │
└─────────────────────────────────────────────────┘
                         │
                        non
                         │                          612
┌─────────────────────────────────────────────────┐
│                Se mettre à l'arrêt               │
└─────────────────────────────────────────────────┘
```

Fig.6b

700

702

Surveiller la qualité Q du lien avec Père(BA)

704

non

Q < Seuil S ?

oui

706

Positionner le nouveau RCRA(N+1) à rajouter

708

Etape 1 de la configuration du nouveau RCRA(N+1) à rajouter

710

Reconfigurer Père(BA)

712

Reconfigurer BA

714

Etape 2 de la configuration du nouveau RCRA(N+1) à rajouter

716

Père(BA) = N+1

Fig. 7

**De 706**

**708**

Reconfigurer la table de routage de RCRA(N+1)
*[Dest = @BA* ➔ *NextHop=<vide> via ifc]*
Dest = @Père(BA) ➔ NextHop = <vide> via ifc
Défaut ➔ NextHop = @Père(BA) via ifc

708-1

Configurer Père(N+1) = Père(BA)

708-2

Configurer Fils(N+1) = BA

708-3

Configurer la réception de la trajectoire de VM depuis Père(N+1)

708-4

Configurer l'émission de la trajectoire de VM vers Fils(N+1)

708-5

Activer la surveillance de la qualité Q du lien avec Père(N+1)

708-6

**Vers 710**

Fig.8a

**De 708**

**710**

Reconfigurer la table de routage de Père(BA)
Dest = @N+1 ➜ NextHop=<vide> via ifc
Dest = @BA ➜ NextHop = @N+1 via ifc

710-1

Configurer Fils(Père(BA)) = N+1

710-2

Configurer l'émission de la trajectoire de VM vers N+1

710-3

**712**

Rajouter N+1 à la liste L des RCRA inclus dans le réseau maillé

712-1

Reconfigurer la table de routage de BA
*[Dest = @N+1 ➜ NextHop=<vide> via ifc]*
Pour tous les RCRA X (autres que N+1) inclus dans L :
Dest = @X ➜ NextHop = @N+1 via ifc
Dest = @VM➜ NextHop = @N+1 via ifc

712-2

Configurer Père(BA) = N+1

712-3

Configurer la réception de la trajectoire de VM depuis N+1

712-4

**714**

Pousser vers N+1 l'intégralité de la trajectoire T reçue

714

Fig.8b

900

Réception par RCRA(N) de l'ordre de repli selon la trajectoire T — 902

Désactiver la surveillance de la qualité Q du lien avec Père(N) — 904

Activer la transmission de la localisation de RCRA(N) vers Fils(N) — 906

Surveiller la distance de repli dr avec Père(N) (le long de la trajectoire T) — 908

Pos(Père(N)) − Pos(N) < dr ? — 910

non

oui

Avancer en sens inverse selon la trajectoire T — 912

non

Pos(N) = origine de la trajectoire T ? — 914

oui

Se mettre à l'arrêt — 916

Fig. 9

**1000**

| Vérifier si la liste L des RCRA inclus dans le réseau maillé est vide ? | → **Fin** |

1002

non

Transmettre un ordre de repli à chacun des RCRA du réseau maillé

1004

RCRA_courant = Père(BA)

1006 ← **De 1018**

Surveiller la position de RCRA_courant le long de la trajectoire T

1008

Pos(RCRA_courant) = origine de la trajectoire T ?

1010

oui     non

**Reconfigurer Père(RCRA_courant) : 1012**

Reconfigurer la table de routage de Père(RCRA_courant)
Dest = @BA ➜ NextHop = <vide> via ifc

1012-1

Configurer Fils(Père(RCRA_courant)) = BA

1012-2

Configurer l'émission de la trajectoire de VM vers BA

1012-3

**Reconfigurer BA : 1014**

Retirer RCRA_courant de la liste L des RCRA inclus dans le réseau maillé

1014-1

Reconfigurer la table de routage de BA
[Dest = @RCRA_courant ➜ NextHop=<vide> via ifc]
Pour tous les RCRA X (autre que Père(RCRA_courant)) restant encore dans L :
Dest = @X ➜ NextHop = @Père(RCRA_courant) via ifc
@VM ➜ NextHop = Père(RCRA_courant) via ifc
@Père(RCRA_courant) ➜ NextHop = <vide> via ifc

1014-2

Configurer Père(BA) = Père(RCRA_courant)

1014-3

Configurer la réception de la trajectoire de VM depuis Père(RCRA_courant)

1014-4 → **Vers 1016**

Fig. 10a

**De 1014**

**Reconfigurer RCRA_courant pour sa remise en zone de réserve : 1016**

Réinitialiser la table de routage de RCRA_courant en supprimant toutes les entrée sauf « Dest = @BA ➔ NextHop=<vide> via ifc »    1016-1

Désactiver la réception de la trajectoire de VM depuis Père(RCRA_courant)    1016-2

Désactiver l'émission de la trajectoire de VM vers Fils(RCRA_courant)    1016-3

Configurer Père(RCRA_courant) = <vide>    1016-4

Configurer Fils(RCRA_courant) = <vide>    1016-5

Activer le déplacement de RCRA_courant vers la zone de réserve    1016-6

1018

Vérifier si la liste L des RCRA inclus dans le réseau est vide ? ——➔ **Fin**
                                                                     oui

non

**Vers 1006**

Fig.10b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015086331 A